# EUROPEAN PATENT SPECIFICATION

(11) **EP 4 736 317 B1**
(45) Date of publication and mention of the grant of the patent: **28.10.2026**
(21) Application number: 24745826.8
(22) Date of filing: 21.06.2024
(51) Int. Cl.: H03F 1/00, H04L 5/00, H04B 1/00

(54) **RECONFIGURABLE CARRIER AGGREGATION MMWAVE RECEIVER ARCHITECTURE**
REKONFIGURIERBARE MMWAVE-EMPFÄNGERARCHITEKTUR MIT TRÄGERAGGREGATION
ARCHITECTURE DE RÉCEPTEUR D'ONDES MILLIMÉTRIQUES À AGRÉGATION DE PORTEUSES RECONFIGURABLE

(30) Priority: 29.06.2023 US 202363511142 P; 20.06.2024 US 202418748252
(43) Date of publication of application: 06.05.2026
(73) Proprietor: QUALCOMM INCORPORATED, San Diego, California 92121-1714 (US)
(72) Inventor: FENG, Yunfei, San Diego, California 92121 (US); LIU, Li, San Diego, California 92121 (US); NARATHONG, Chiewcharn, San Diego, California 92121 (US); MEDRA, Alaaeldien Mohamed Abdelrazek, San Diego, California 92121 (US); SANKARANARAYANAN, Janakiram, San Diego, California 92121 (US); FANG, Sher Jiun, San Diego, California 92121 (US)
(74) Representative: Wagner & Geyer
(86) International application number: PCT/US2024/034962
(87) International publication number: WO 2025/006330

(56) References cited:
- US-A1- 2023 057 499
- US-A1- 2023 089 569

## Description

### CROSS-REFERENCE TO RELATED APPLICATION

This application claims the benefit of U.S. Application No. 18/748,252, filed June 20, 2024, entitled "RECONFIGURABLE CARRIER AGGREGATION MMWAVE RECEIVER ARCHITECTURE," which claims the benefit of U.S. Provisional Application No. 63/511,142, filed June 29, 2023, entitled "RECONFIGURABLE CARRIER AGGREGATION MMWAVE RECEIVER ARCHITECTURE," both of which are assigned to the assignee hereof.

### BACKGROUND

Wireless communication systems have developed through various generations, including a first-generation analog wireless phone service (1G), a second-generation (2G) digital wireless phone service (including interim 2.5G and 2.75G networks), a third-generation (3G) high speed data, Internet-capable wireless service, a fourthgeneration (4G) service (e.g., Long Term Evolution (LTE) or WiMax^{®}), a fifthgeneration (5G) service (e.g., 5G New Radio (NR)), etc. There are presently many different types of wireless communication systems in use, including Cellular and Personal Communications Service (PCS) systems. Examples of known cellular systems include the cellular Analog Advanced Mobile Phone System (AMPS), and digital cellular systems based on Code Division Multiple Access (CDMA), Frequency Division Multiple Access (FDMA), Orthogonal Frequency Division Multiple Access (OFDMA), Time Division Multiple Access (TDMA), the Global System for Mobile access (GSM) variation of TDMA, etc.

A fifth generation (5G) mobile standard calls for higher data transfer speeds, greater numbers of connections, and better coverage, among other improvements. The 5G standard, according to the Next Generation Mobile Networks Alliance, is designed to provide data rates of several tens of megabits per second to each of tens of thousands of users, with 1 gigabit per second to tens of workers on an office floor. Several hundreds of thousands of simultaneous connections should be supported in order to support large sensor deployments. Carrier aggregation (CA) techniques may be utilized to further increase the data transfer speeds in 5G networks. The wireless nodes in these networks may be configured to utilize carrier aggregation across different radio frequency bands.
Attention is drawn to US 2023/057499 A1 describing a reconfigurable amplifier that includes a first transistor having a gate coupled to an input of the reconfigurable amplifier, and a source coupled to a ground. The reconfigurable amplifier also includes a gate control circuit, and a second transistor having a gate coupled to the gate control circuit, a source coupled to a drain of the first transistor, and a drain coupled to an output of the reconfigurable amplifier, wherein the gate control circuit is configured to output a bias voltage to the gate of the second transistor in a cascode mode, and output a switch voltage to the gate of the second transistor in a non-cascode mode. The reconfigurable amplifier further includes a load coupled to the output of the reconfigurable amplifier.
Attention is further drawn to US 2023/089569 A1 describing that carrier aggregation (CA) may cause interference between operation on two or more carriers within a user equipment (UE). This interference can degrade signal quality on one or more of the carriers involved in the carrier aggregation, which may be referred to as "desensing" one or more carriers. One or more isolating buffers may be coupled at a downconversion mixer at a point where the down-conversion mixer receives a signal from a transmission line for isolating the transmission line from other transmission lines. The isolating buffer may reduce the effect of interference between multiple transmission lines carrying different carriers during carrier aggregation (CA) operation. The isolating buffers may be used in an RF transceiver supporting both 5G sub-7 GHz and 5G mmWave wireless networks and carrier aggregation across sub-7 GHz and mmWave bands.

### SUMMARY

The present invention is set forth in the independent claims, respectively. Further embodiments of the invention are described in the dependent claims.

An example method for operating a wireless node in a carrier aggregation mode or a single band mode according to the disclosure includes configuring the wireless node to operate in at least one of the carrier aggregation mode or the single band mode, configuring a high band receive chain in the wireless node to utilize a first intermediate frequency in response to configuring the wireless node to operate in the single band mode, and configuring a low band receive chain to utilize the first intermediate frequency, and the high band receive chain to utilize a second intermediate frequency in response to configuring the wireless node to operate in the carrier aggregation mode.

An example apparatus according to the disclosure including at least one memory, at least one receiver comprising a low band circuit and a high band circuit including a configurable intermediate frequency path, at least one processor communicatively coupled to the at least one memory and the at least one receiver, and configured to: configure the at least one receiver to operate in at least one of a carrier aggregation mode or a single band mode, configure the high band circuit to utilize a first intermediate frequency in response to configuring the at least one receiver to operate in the single band mode, and configure the low band circuit to utilize the first intermediate frequency, and the high band circuit to utilize a second intermediate frequency in response to configuring the at least one receiver to operate in the carrier aggregation mode.

Items and/or techniques described herein may provide one or more of the following capabilities, as well as other capabilities not mentioned. A mmWave receiver may be configured to utilize carrier aggregation (CA) schemes. The CA schemes may include transmissions in different frequency bands, and the receiver may be a superheterodyne configuration including respective high band and low band circuits for downconverting the received mmWave signals. The high band and low band circuits may be configured to use multiple intermediate frequency (IF) frequencies. The receiver may be configured to operate in a CA-mode to utilize CA, or in a non-CA mode to operate on a single band. While in CA-mode, the high band circuit and the low band circuit in the receiver may utilize different IF frequencies. In the non-CA mode, the high band circuit may be configured to utilize the same IF frequency as the low band circuit when the receiver is in the non-CA mode. Power savings may be realized when the high band circuit utilizes the lower IF frequency. Other capabilities may be provided and not every implementation according to the disclosure must provide any, let alone all, of the capabilities discussed.

### BRIEF DESCRIPTION OF THE DRAWINGS

FIG. 1 is a simplified diagram of an example wireless communications system.
FIG. 2 is a block diagram of components of an example user equipment shown in FIG. 1.
FIG. 3 is a block diagram of components of an example transmission/reception point.
FIG. 4 is a block diagram of components of a server, various examples of which are shown in FIG. 1.
FIGS. 5A-5C show three examples of carrier aggregation (CA).
FIG. 6 is a block diagram of an example radio frequency receiver including a high band receiver circuit and a low band receiver circuit.
FIG. 7 is a block diagram of an example high band receiver circuit with a configurable intermediate frequency (IF) path.
FIG. 8 is a system diagram of an example configurable IF path in the high band receiver of FIG. 7.
FIGS. 9A and 9B show examples of configurable IF paths for a carrier aggregation mode and a single band mode.
FIG. 10 is a block flow diagram of an example method for operating a wireless node to operate in a carrier aggregation mode or a single band mode.

### DETAILED DESCRIPTION

Techniques are discussed herein for configurable millimeter wave (mmWave) receiver architectures for carrier aggregation (CA). In general, in 5G NR networks, multiple component carriers may be aggregated and simultaneously transmitted to a wireless node (e.g., user equipment (UE)) in the downlink or from a wireless node in the uplink. The increase in simultaneous component carriers may enable increased operating bandwidth and higher link data rates. The component carriers do not need to be contiguous in the frequency domain and may be in the same frequency band or different frequency bands. CA capable mmWave systems may be configured to operate in a CA-mode and a non-CA mode (e.g., single band mode). While in a CA-mode, multiple carrier frequencies may be used simultaneously to transmit and receive data.

The techniques provided herein enable adjustments to an intermediate frequency (IF) in a mmWave receiver for single band and CA operation modes. The receiver may be configured to operate in different frequency modes and may have corresponding high band and low band circuitry. In an example, the IF frequency may be adjusted to a high-band mode when the receiver is in a single band mode, or when a low-band IF frequency is not required. In an example, the IF frequency may be adjusted down to the IF that is used for low-band when in a single band mode.

A mmWave receiver may be configured with separate IF stages for each carrier frequency. In a non-CA mode, where only a single carrier frequency is used, the receiver may only utilize a single IF stage for signal processing. The mmWave spectrum for 5G NR includes frequency bands in the range of 24.25 GHz to 52.6 GHz. In an example, a mmWave receiver system may include high band circuits configured for 37GHz - 43.5GHz (e.g., n259, n260 bands), and low band circuits configured for 25.25GHz - 29.5GHz (e.g., n257, n258, n261 bands). Other circuits may also be configured for sub-6GHz bands. A high band circuit may be configured to utilize (e.g., down convert to) an IF in the range of 10GHz - 14GHz, and a low band circuit may utilize an IF in the range of 8GHz - 10GHz. Other IF values may also be used based on the receiver architecture and requirements for operating on legacy bands. In prior receiver configurations, a high band circuit may be configured to exclusively utilize a dedicated IF (e.g., 12GHz) that is different than the IF for the low band circuit (e.g., 9GHz) for both CA and non-CA modes. The higher IF value requires additional power due to the increased power consumed by the higher frequency local oscillators, and the associated higher frequency components and digital signal processing procedures. The techniques provided herein enable the use of a single IF for both the high band and low band circuits while the receiver is in a non-CA mode. The reduced IF during non-CA mode allows the high band circuit to take advantage of the lower IF frequency and the corresponding reduction in power consumption. Other advantages may also be realized.

The description herein may refer to sequences of actions to be performed, for example, by elements of a computing device. Various actions described herein can be performed by specific circuits (e.g., an application specific integrated circuit (ASIC)), by program instructions being executed by one or more processors, or by a combination of both. Sequences of actions described herein may be embodied within a non-transitory computer-readable medium having stored thereon a corresponding set of computer instructions that upon execution would cause an associated processor to perform the functionality described herein. Thus, the various examples described herein may be embodied in a number of different forms, all of which are within the scope of the disclosure, including claimed subject matter.

As used herein, the terms "user equipment" (UE) and "base station" are not specific to or otherwise limited to any particular Radio Access Technology (RAT), unless otherwise noted. In general, a UE may be any wireless communication device (e.g., a mobile phone, router, tablet computer, laptop computer, consumer asset tracking device, Internet of Things (IoT) device, etc.) used to communicate over a wireless communications network. A UE may be mobile or may (e.g., at certain times) be stationary, and may communicate with a Radio Access Network (RAN). As used herein, the term "UE" may be referred to interchangeably as an "access terminal" or "AT," a "client device," a "wireless device," a "subscriber device," a "subscriber terminal," a "subscriber station," a "user terminal" or UT, a "mobile terminal," a "mobile station," a "mobile device," or variations thereof. Generally, UEs can communicate with a core network via a RAN, and through the core network the UEs can be connected with external networks such as the Internet and with other UEs. Of course, other mechanisms of connecting to the core network, the Internet, and/or each other (e.g., without the use of a network) are also possible for the UEs, such as over wired access networks, WiFi^{®} networks (e.g., based on IEEE (Institute of Electrical and Electronics Engineers) 802.11, etc.) and so on.

A base station may operate according to one of several RATs in communication with UEs depending on the network in which it is deployed. Examples of a base station include an Access Point (AP), a Network Node, a NodeB, an evolved NodeB (eNB), or a general Node B (gNodeB, gNB). In addition, in some systems a base station may provide purely edge node signaling functions while in other systems it may provide additional control and/or network management functions.

UEs may be embodied by any of a number of types of devices including but not limited to printed circuit (PC) cards, compact flash devices, external or internal modems, wireless or wireline phones, smartphones, tablets, consumer asset tracking devices, asset tags, and so on. A communication link through which UEs can send signals to a RAN is called an uplink channel (e.g., a reverse traffic channel, a reverse control channel, an access channel, etc.). A communication link through which the RAN can send signals to UEs is called a downlink or forward link channel (e.g., a paging channel, a control channel, a broadcast channel, a forward traffic channel, etc.). As used herein the term traffic channel (TCH) can refer to either an uplink / reverse or downlink / forward traffic channel.

As used herein, the term "cell" or "sector" may correspond to one of a plurality of cells of a base station, or to the base station itself, depending on the context. The term "cell" may refer to a logical communication entity used for communication with a base station (for example, over a carrier), and may be associated with an identifier for distinguishing neighboring cells (for example, a physical cell identifier (PCID), a virtual cell identifier (VCID)) operating via the same or a different carrier. In some examples, a carrier may support multiple cells, and different cells may be configured according to different protocol types (for example, machine-type communication (MTC), narrowband Internet-of-Things (NB-IoT), enhanced mobile broadband (eMBB), or others) that may provide access for different types of devices. In some examples, the term "cell" may refer to a portion of a geographic coverage area (for example, a sector) over which the logical entity operates.

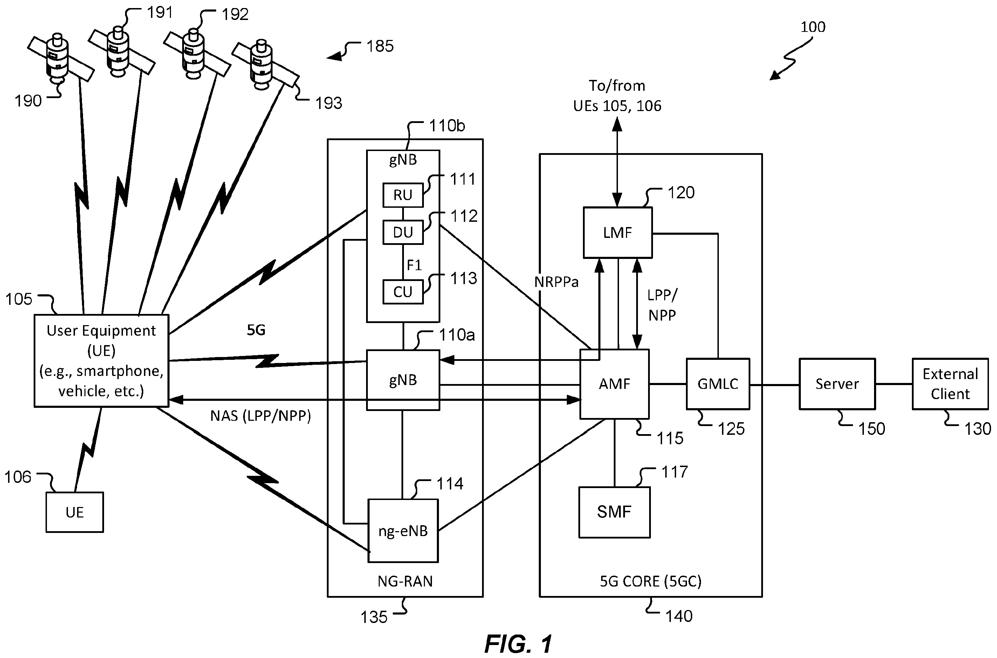

Referring to FIG. 1, an example of a communication system 100 includes a UE 105, a UE 106, a Radio Access Network (RAN), here a Fifth Generation (5G) Next Generation (NG) RAN (NG-RAN) 135, a 5G Core Network (5GC) 140, and a server 150. The UE 105 and/or the UE 106 may be, e.g., an IoT device, a location tracker device, a cellular telephone, a vehicle (e.g., a car, a truck, a bus, a boat, etc.), or another device. A 5G network may also be referred to as a New Radio (NR) network; NG-RAN 135 may be referred to as a 5G RAN or as an NR RAN: and 5GC 140 may be referred to as an NG Core network (NGC). Standardization of an NG-RAN and 5GC is ongoing in the 3rd Generation Partnership Project (3GPP). Accordingly, the NG-RAN 135 and the 5GC 140 may conform to current or future standards for 5G support from 3GPP and may be further configured to utilize carrier aggregation techniques to increase data transfer capabilites. The NG-RAN 135 may be another type of RAN, e.g., a 3G RAN, a 4G Long Term Evolution (LTE) RAN, etc. The UE 106 may be configured and coupled similarly to the UE 105 to send and/or receive signals to/from similar other entities in the system 100, but such signaling is not indicated in FIG. 1 for the sake of simplicity of the figure. Similarly, the discussion focuses on the UE 105 for the sake of simplicity. The communication system 100 may utilize information from a constellation 185 of satellite vehicles (SVs) 190, 191, 192, 193 for a Satellite Positioning System (SPS) (e.g., a Global Navigation Satellite System (GNSS)) like the Global Positioning System (GPS), the Global Navigation Satellite System (GLONASS), Galileo, or Beidou or some other local or regional SPS such as the Indian Regional Navigational Satellite System (IRNSS), the European Geostationary Navigation Overlay Service (EGNOS), or the Wide Area Augmentation System (WAAS). Additional components of the communication system 100 are described below. The communication system 100 may include additional or alternative components.

As shown in FIG. 1, the NG-RAN 135 includes NR nodeBs (gNBs) 110a, 110b, and a next generation eNodeB (ng-eNB) 114, and the 5GC 140 includes an Access and Mobility Management Function (AMF) 115, a Session Management Function (SMF) 117, a Location Management Function (LMF) 120, and a Gateway Mobile Location Center (GMLC) 125. The gNBs 110a, 110b and the ng-eNB 114 are communicatively coupled to each other, are each configured to bi-directionally wirelessly communicate with the UE 105, and are each communicatively coupled to, and configured to bi-directionally communicate with, the AMF 115. The gNBs 110a, 110b, and the ng-eNB 114 may be referred to as base stations (BSs). The AMF 115, the SMF 117, the LMF 120, and the GMLC 125 are communicatively coupled to each other, and the GMLC is communicatively coupled to an external client 130. The SMF 117 may serve as an initial contact point of a Service Control Function (SCF) (not shown) to create, control, and delete media sessions. Base stations such as the gNBs 110a, 110b and/or the ng-eNB 114 may be a macro cell (e.g., a high-power cellular base station), or a small cell (e.g., a low-power cellular base station), or an access point (e.g., a short-range base station configured to communicate with short-range technology such as WiFi^{®}, WiFi^{®}-Direct (WiFi^{®}-D), Bluetooth^{®}, Bluetooth^{®}-low energy (BLE), Zigbee^{®}, etc. One or more base stations, e.g., one or more of the gNBs 110a, 110b and/or the ng-eNB 114 may be configured to communicate with the UE 105 via multiple carriers. Each of the gNBs 110a, 110b and/or the ng-eNB 114 may provide communication coverage for a respective geographic region, e.g., a cell. Each cell may be partitioned into multiple sectors as a function of the base station antennas.

FIG. 1 provides a generalized illustration of various components, any or all of which may be utilized as appropriate, and each of which may be duplicated or omitted as necessary. Specifically, although one UE 105 is illustrated, many UEs (e.g., hundreds, thousands, millions, etc.) may be utilized in the communication system 100. Similarly, the communication system 100 may include a larger (or smaller) number of SVs (i.e., more or fewer than the four SVs 190-193 shown), gNBs 110a, 110b, ng-eNBs 114, AMFs 115, external clients 130, and/or other components. The illustrated connections that connect the various components in the communication system 100 include data and signaling connections which may include additional (intermediary) components, direct or indirect physical and/or wireless connections, and/or additional networks. Furthermore, components may be rearranged, combined, separated, substituted, and/or omitted, depending on desired functionality.

While FIG. 1 illustrates a 5G-based network, similar network implementations and configurations may be used for other communication technologies, such as 3G, Long Term Evolution (LTE), etc. Implementations described herein (be they for 5G technology and/or for one or more other communication technologies and/or protocols) may be used to transmit (or broadcast) directional synchronization signals, receive and measure directional signals at UEs (e.g., the UE 105) and/or provide location assistance to the UE 105 (via the GMLC 125 or other location server) and/or compute a location for the UE 105 at a location-capable device such as the UE 105, the gNB 110a, 110b, or the LMF 120 based on measurement quantities received at the UE 105 for such directionally-transmitted signals. The gateway mobile location center (GMLC) 125, the location management function (LMF) 120, the access and mobility management function (AMF) 115, the SMF 117, the ng-eNB (eNodeB) 114 and the gNBs (gNodeBs) 110a, 110b are examples and may, in various embodiments, be replaced by or include various other location server functionality and/or base station functionality respectively.

The system 100 is capable of wireless communication in that components of the system 100 can communicate with one another (at least some times) using wireless connections directly or indirectly, e.g., via the gNBs 110a, 110b, the ng-eNB 114, and/or the 5GC 140 (and/or one or more other devices not shown, such as one or more other base transceiver stations). For indirect communications, the communications may be altered during transmission from one entity to another, e.g., to alter header information of data packets, to change format, etc. The UE 105 may include multiple UEs and may be a mobile wireless communication device, but may communicate wirelessly and via wired connections. The UE 105 may be any of a variety of devices, e.g., a smartphone, a tablet computer, a vehicle-based device, etc., but these are examples as the UE 105 is not required to be any of these configurations, and other configurations of UEs may be used. Other UEs may include wearable devices (e.g., smart watches, smart jewelry, smart glasses or headsets, etc.). Still other UEs may be used, whether currently existing or developed in the future. Further, other wireless devices (whether mobile or not) may be implemented within the system 100 and may communicate with each other and/or with the UE 105, the gNBs 110a, 110b, the ng-eNB 114, the 5GC 140, and/or the external client 130. For example, such other devices may include internet of thing (IoT) devices, medical devices, home entertainment and/or automation devices, etc. The 5GC 140 may communicate with the external client 130 (e.g., a computer system), e.g., to allow the external client 130 to request and/or receive location information regarding the UE 105 (e.g., via the GMLC 125).

The UE 105 or other devices may be configured to communicate in various networks and/or for various purposes and/or using various technologies (e.g., 5G, Wi-Fi^{®} communication, multiple frequencies of Wi-Fi^{®} communication, satellite positioning, one or more types of communications (e.g., GSM (Global System for Mobiles), CDMA (Code Division Multiple Access), LTE (Long Term Evolution), V2X (Vehicle-to-Everything, e.g., V2P (Vehicle-to-Pedestrian), V2I (Vehicle-to-Infrastructure), V2V (Vehicle-to-Vehicle), etc.), IEEE 802.11p, etc.). V2X communications may be cellular (Cellular-V2X (C-V2X)) and/or WiFi^{®} (e.g., DSRC (Dedicated Short-Range Connection)). The system 100 may support operation on multiple carriers (waveform signals of different frequencies). Multi-carrier transmitters can transmit modulated signals simultaneously on the multiple carriers. Each modulated signal may be a Code Division Multiple Access (CDMA) signal, a Time Division Multiple Access (TDMA) signal, an Orthogonal Frequency Division Multiple Access (OFDMA) signal, a Single-Carrier Frequency Division Multiple Access (SC-FDMA) signal, etc. Each modulated signal may be sent on a different carrier and may carry pilot, overhead information, data, etc. The UEs 105, 106 may communicate with each other through UE-to-UE sidelink (SL) communications by transmitting over one or more sidelink channels such as a physical sidelink synchronization channel (PSSCH), a physical sidelink broadcast channel (PSBCH), or a physical sidelink control channel (PSCCH). Direct wireless-device-to-wireless-device communications without going through a network may be referred to generally as sidelink communications without limiting the communications to a particular protocol.

The UE 105 may comprise and/or may be referred to as a device, a mobile device, a wireless device, a mobile terminal, a terminal, a mobile station (MS), a Secure User Plane Location (SUPL) Enabled Terminal (SET), or by some other name. Moreover, the UE 105 may correspond to a cellphone, smartphone, laptop, tablet, PDA, consumer asset tracking device, navigation device, Internet of Things (IoT) device, health monitors, security systems, smart city sensors, smart meters, wearable trackers, or some other portable or moveable device. Typically, though not necessarily, the UE 105 may support wireless communication using one or more Radio Access Technologies (RATs) such as Global System for Mobile communication (GSM), Code Division Multiple Access (CDMA), Wideband CDMA (WCDMA), LTE, High Rate Packet Data (HRPD), IEEE 802.11 WiFi^{®} (also referred to as Wi-Fi^{®}), Bluetooth^{®} (BT), Worldwide Interoperability for Microwave Access (WiMax^{®}), 5G new radio (NR) (e.g., using the NG-RAN 135 and the 5GC 140), etc. The UE 105 may support wireless communication using a Wireless Local Area Network (WLAN) which may connect to other networks (e.g., the Internet) using a Digital Subscriber Line (DSL) or packet cable, for example. The use of one or more of these RATs may allow the UE 105 to communicate with the external client 130 (e.g., via elements of the 5GC 140 not shown in FIG. 1, or possibly via the GMLC 125) and/or allow the external client 130 to receive location information regarding the UE 105 (e.g., via the GMLC 125).

The UE 105 may include a single entity or may include multiple entities such as in a personal area network where a user may employ audio, video and/or data I/O (input/output) devices and/or body sensors and a separate wireline or wireless modem. The UE 105 may be configured to communicate with other entities using one or more of a variety of technologies. The UE 105 may be configured to connect indirectly to one or more communication networks via one or more device-to-device (D2D) peer-to-peer (P2P) links. The D2D P2P links may be supported with any appropriate D2D radio access technology (RAT), such as LTE Direct (LTE-D), WiFi^{®} Direct (WiFi^{®}-D), Bluetooth^{®}, and so on. One or more of a group of UEs utilizing D2D communications may be within a geographic coverage area of a Transmission/Reception Point (TRP) such as one or more of the gNBs 110a, 110b, and/or the ng-eNB 114. Other UEs in such a group may be outside such geographic coverage areas, or may be otherwise unable to receive transmissions from a base station. Groups of UEs communicating via D2D communications may utilize a one-to-many (1:M) system in which each UE may transmit to other UEs in the group. A TRP may facilitate scheduling of resources for D2D communications. In other cases, D2D communications may be carried out between UEs without the involvement of a TRP. One or more of a group of UEs utilizing D2D communications may be within a geographic coverage area of a TRP. Other UEs in such a group may be outside such geographic coverage areas, or be otherwise unable to receive transmissions from a base station. Groups of UEs communicating via D2D communications may utilize a one-to-many (1:M) system in which each UE may transmit to other UEs in the group. A TRP may facilitate scheduling of resources for D2D communications. In other cases, D2D communications may be carried out between UEs without the involvement of a TRP.

Base stations (BSs) in the NG-RAN 135 shown in FIG. 1 include NR Node Bs, referred to as the gNBs 110a and 110b. Pairs of the gNBs 110a, 110b in the NG-RAN 135 may be connected to one another via one or more other gNBs. Access to the 5G network is provided to the UE 105 via wireless communication between the UE 105 and one or more of the gNBs 110a, 110b, which may provide wireless communications access to the 5GC 140 on behalf of the UE 105 using 5G. In FIG. 1, the serving gNB for the UE 105 is assumed to be the gNB 110a, although another gNB (e.g., the gNB 110b) may act as a serving gNB if the UE 105 moves to another location or may act as a secondary gNB to provide additional throughput and bandwidth to the UE 105.

Base stations (BSs) in the NG-RAN 135 shown in FIG. 1 may include the ng-eNB 114, also referred to as a next generation evolved Node B. The ng-eNB 114 may be connected to one or more of the gNBs 110a, 110b in the NG-RAN 135, possibly via one or more other gNBs and/or one or more other ng-eNBs. The ng-eNB 114 may provide LTE wireless access and/or evolved LTE (eLTE) wireless access to the UE 105. One or more of the gNBs 110a, 110b and/or the ng-eNB 114 may be configured to function as positioning-only beacons which may transmit signals to assist with determining the position of the UE 105 but may not receive signals from the UE 105 or from other UEs.

The gNBs 110a, 110b and/or the ng-eNB 114 may each comprise one or more TRPs. For example, each sector within a cell of a BS may comprise a TRP, although multiple TRPs may share one or more components (e.g., share a processor but have separate antennas). The system 100 may include macro TRPs exclusively or the system 100 may have TRPs of different types, e.g., macro, pico, and/or femto TRPs, etc. A macro TRP may cover a relatively large geographic area (e.g., several kilometers in radius) and may allow unrestricted access by terminals with service subscription. A pico TRP may cover a relatively small geographic area (e.g., a pico cell) and may allow unrestricted access by terminals with service subscription. A femto or home TRP may cover a relatively small geographic area (e.g., a femto cell) and may allow restricted access by terminals having association with the femto cell (e.g., terminals for users in a home).

Each of the gNBs 110a, 110b and/or the ng-eNB 114 may include a radio unit (RU), a distributed unit (DU), and a central unit (CU). For example, the gNB 110b includes an RU 111, a DU 112, and a CU 113. The RU 111, DU 112, and CU 113 divide functionality of the gNB 110b. While the gNB 110b is shown with a single RU, a single DU, and a single CU, a gNB may include one or more RUs, one or more DUs, and/or one or more CUs. An interface between the CU 113 and the DU 112 is referred to as an F1 interface. The RU 111 is configured to perform digital front end (DFE) functions (e.g., analog-to-digital conversion, filtering, power amplification, transmission/reception) and digital beamforming, and includes a portion of the physical (PHY) layer. The RU 111 may perform the DFE using massive multiple input/multiple output (MIMO) and may be integrated with one or more antennas of the gNB 110b. The DU 112 hosts the Radio Link Control (RLC), Medium Access Control (MAC), and physical layers of the gNB 110b. One DU can support one or more cells, and each cell is supported by a single DU. The operation of the DU 112 is controlled by the CU 113. The CU 113 is configured to perform functions for transferring user data, mobility control, radio access network sharing, positioning, session management, etc. although some functions are allocated exclusively to the DU 112. The CU 113 hosts the Radio Resource Control (RRC), Service Data Adaptation Protocol (SDAP), and Packet Data Convergence Protocol (PDCP) protocols of the gNB 110b. The UE 105 may communicate with the CU 113 via RRC, SDAP, and PDCP layers, with the DU 112 via the RLC, MAC, and PHY layers, and with the RU 111 via the PHY layer.

As noted, while FIG. 1 depicts nodes configured to communicate according to 5G communication protocols, nodes configured to communicate according to other communication protocols, such as, for example, an LTE protocol or IEEE 802.11x protocol, may be used. For example, in an Evolved Packet System (EPS) providing LTE wireless access to the UE 105, a RAN may comprise an Evolved Universal Mobile Telecommunications System (UMTS) Terrestrial Radio Access Network (E-UTRAN) which may comprise base stations comprising evolved Node Bs (eNBs). A core network for EPS may comprise an Evolved Packet Core (EPC). An EPS may comprise an E-UTRAN plus EPC, where the E-UTRAN corresponds to the NG-RAN 135 and the EPC corresponds to the 5GC 140 in FIG. 1.

The gNBs 110a, 110b and the ng-eNB 114 may communicate with the AMF 115, which, for positioning functionality, communicates with the LMF 120. The AMF 115 may support mobility of the UE 105, including cell change and handover and may participate in supporting a signaling connection to the UE 105 and possibly data and voice bearers for the UE 105. The LMF 120 may communicate directly with the UE 105, e.g., through wireless communications, or directly with the gNBs 110a, 110b and/or the ng-eNB 114. The LMF 120 may support positioning of the UE 105 when the UE 105 accesses the NG-RAN 135 and may support position procedures / methods such as Assisted GNSS (A-GNSS), Observed Time Difference of Arrival (OTDOA) (e.g., Downlink (DL) OTDOA or Uplink (UL) OTDOA), Round Trip Time (RTT), Multi-Cell RTT, Real Time Kinematic (RTK), Precise Point Positioning (PPP), Differential GNSS (DGNSS), Enhanced Cell ID (E-CID), angle of arrival (AoA), angle of departure (AoD), and/or other position methods. The LMF 120 may process location services requests for the UE 105, e.g., received from the AMF 115 or from the GMLC 125. The LMF 120 may be connected to the AMF 115 and/or to the GMLC 125. The LMF 120 may be referred to by other names such as a Location Manager (LM), Location Function (LF), commercial LMF (CLMF), or value added LMF (VLMF). A node / system that implements the LMF 120 may additionally or alternatively implement other types of location-support modules, such as an Enhanced Serving Mobile Location Center (E-SMLC) or a Secure User Plane Location (SUPL) Location Platform (SLP). At least part of the positioning functionality (including derivation of the location of the UE 105) may be performed at the UE 105 (e.g., using signal measurements obtained by the UE 105 for signals transmitted by wireless nodes such as the gNBs 110a, 110b and/or the ng-eNB 114, and/or assistance data provided to the UE 105, e.g., by the LMF 120). The AMF 115 may serve as a control node that processes signaling between the UE 105 and the 5GC 140, and may provide QoS (Quality of Service) flow and session management. The AMF 115 may support mobility of the UE 105 including cell change and handover and may participate in supporting signaling connection to the UE 105.

The server 150, e.g., a cloud server, is configured to obtain and provide location estimates of the UE 105 to the external client 130. The server 150 may, for example, be configured to run a microservice/service that obtains the location estimate of the UE 105. The server 150 may, for example, pull the location estimate from (e.g., by sending a location request to) the UE 105, one or more of the gNBs 110a, 110b (e.g., via the RU 111, the DU 112, and the CU 113) and/or the ng-eNB 114, and/or the LMF 120. As another example, the UE 105, one or more of the gNBs 110a, 110b (e.g., via the RU 111, the DU 112, and the CU 113), and/or the LMF 120 may push the location estimate of the UE 105 to the server 150.

The GMLC 125 may support a location request for the UE 105 received from the external client 130 via the server 150 and may forward such a location request to the AMF 115 for forwarding by the AMF 115 to the LMF 120 or may forward the location request directly to the LMF 120. A location response from the LMF 120 (e.g., containing a location estimate for the UE 105) may be returned to the GMLC 125 either directly or via the AMF 115 and the GMLC 125 may then return the location response (e.g., containing the location estimate) to the external client 130 via the server 150. The GMLC 125 is shown connected to both the AMF 115 and LMF 120, though it may not be connected to the AMF 115 or the LMF 120 in some implementations.

As further illustrated in FIG. 1, the LMF 120 may communicate with the gNBs 110a, 110b and/or the ng-eNB 114 using a New Radio Position Protocol A (which may be referred to as NPPa or NRPPa), which may be defined in 3GPP Technical Specification (TS) 38.455. NRPPa may be the same as, similar to, or an extension of the LTE Positioning Protocol A (LPPa) defined in 3GPP TS 36.455, with NRPPa messages being transferred between the gNB 110a (or the gNB 110b) and the LMF 120, and/or between the ng-eNB 114 and the LMF 120, via the AMF 115. As further illustrated in FIG. 1, the LMF 120 and the UE 105 may communicate using an LTE Positioning Protocol (LPP), which may be defined in 3GPP TS 36.355. The LMF 120 and the UE 105 may also or instead communicate using a New Radio Positioning Protocol (which may be referred to as NPP or NRPP), which may be the same as, similar to, or an extension of LPP. Here, LPP and/or NPP messages may be transferred between the UE 105 and the LMF 120 via the AMF 115 and the serving gNB 110a, 110b or the serving ng-eNB 114 for the UE 105. For example, LPP and/or NPP messages may be transferred between the LMF 120 and the AMF 115 using a 5G Location Services Application Protocol (LCS AP) and may be transferred between the AMF 115 and the UE 105 using a 5G Non-Access Stratum (NAS) protocol. The LPP and/or NPP protocol may be used to support positioning of the UE 105 using UE-assisted and/or UE-based position methods such as A-GNSS, RTK, OTDOA and/or E-CID. The NRPPa protocol may be used to support positioning of the UE 105 using network-based position methods such as E-CID (e.g., when used with measurements obtained by the gNB 110a, 110b or the ng-eNB 114) and/or may be used by the LMF 120 to obtain location related information from the gNBs 110a, 110b and/or the ng-eNB 114, such as parameters defining directional SS or PRS transmissions from the gNBs 110a, 110b, and/or the ng-eNB 114. The LMF 120 may be co-located or integrated with a gNB or a TRP, or may be disposed remote from the gNB and/or the TRP and configured to communicate directly or indirectly with the gNB and/or the TRP.

As noted, while the communication system 100 is described in relation to 5G technology, the communication system 100 may be implemented to support other communication technologies, such as GSM, WCDMA, LTE, etc., that are used for supporting and interacting with mobile devices such as the UE 105 (e.g., to implement voice, data, positioning, and other functionalities). In some such embodiments, the 5GC 140 may be configured to control different air interfaces. For example, the 5GC 140 may be connected to a WLAN using a Non-3GPP InterWorking Function (N3IWF, not shown FIG. 1) in the 5GC 140. For example, the WLAN may support IEEE 802.11 WiFi^{®} access for the UE 105 and may comprise one or more WiFi^{®} APs. Here, the N3IWF may connect to the WLAN and to other elements in the 5GC 140 such as the AMF 115. In some embodiments, both the NG-RAN 135 and the 5GC 140 may be replaced by one or more other RANs and one or more other core networks. For example, in an EPS, the NG-RAN 135 may be replaced by an E-UTRAN containing eNBs and the 5GC 140 may be replaced by an EPC containing a Mobility Management Entity (MME) in place of the AMF 115, an E-SMLC in place of the LMF 120, and a GMLC that may be similar to the GMLC 125. In such an EPS, the E-SMLC may use LPPa in place of NRPPa to send and receive location information to and from the eNBs in the E-UTRAN and may use LPP to support positioning of the UE 105. In these other embodiments, positioning of the UE 105 using directional PRSs may be supported in an analogous manner to that described herein for a 5G network with the difference that functions and procedures described herein for the gNBs 110a, 110b, the ng-eNB 114, the AMF 115, and the LMF 120 may, in some cases, apply instead to other network elements such eNBs, WiFi^{®} APs, an MME, and an E-SMLC.

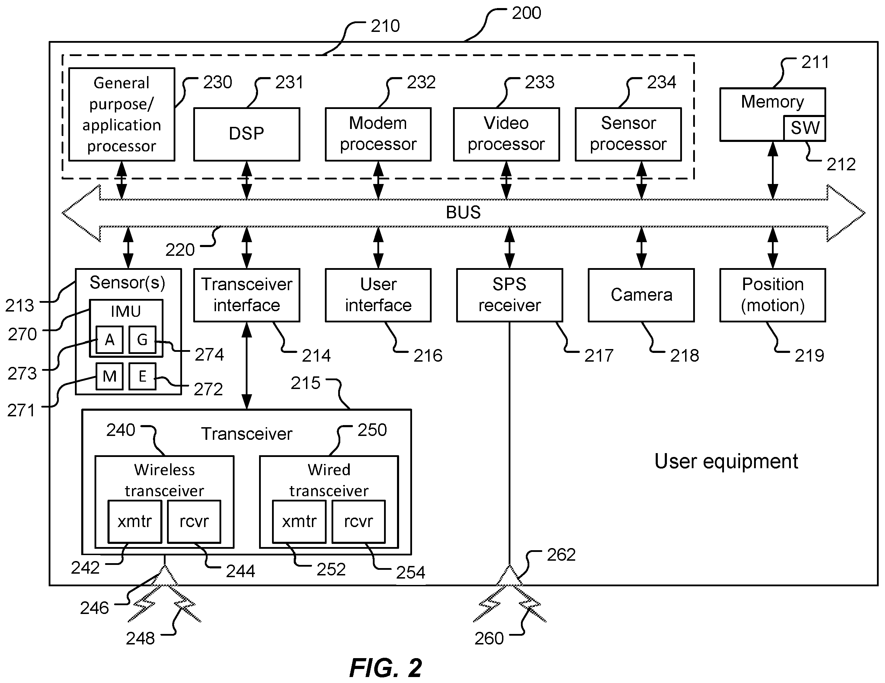

Referring also to FIG. 2, a UE 200 may be an example of one of the UEs 105, 106 and may comprise a computing platform including a processor 210, memory 211 including software (SW) 212, one or more sensors 213, a transceiver interface 214 for a transceiver 215 (that includes a wireless transceiver 240 and a wired transceiver 250), a user interface 216, a Satellite Positioning System (SPS) receiver 217, a camera 218, and a position device (PD) 219. The processor 210, the memory 211, the sensor(s) 213, the transceiver interface 214, the user interface 216, the SPS receiver 217, the camera 218, and the position device 219 may be communicatively coupled to each other by a bus 220 (which may be configured, e.g., for optical and/or electrical communication). One or more of the shown apparatus (e.g., the camera 218, the position device 219, and/or one or more of the sensor(s) 213, etc.) may be omitted from the UE 200. The processor 210 may include one or more hardware devices, e.g., a central processing unit (CPU), a microcontroller, an application specific integrated circuit (ASIC), etc. The processor 210 may comprise multiple processors including a general-purpose/application processor 230, a Digital Signal Processor (DSP) 231, a modem processor 232, a video processor 233, and/or a sensor processor 234. One or more of the processors 230-234 may comprise multiple devices (e.g., multiple processors). For example, the sensor processor 234 may comprise, e.g., processors for RF (radio frequency) sensing (with one or more (cellular) wireless signals transmitted and reflection(s) used to identify, map, and/or track an object), and/or ultrasound, etc. The modem processor 232 may support dual SIM/dual connectivity (or even more SIMs). For example, a SIM (Subscriber Identity Module or Subscriber Identification Module) may be used by an Original Equipment Manufacturer (OEM), and another SIM may be used by an end user of the UE 200 for connectivity. The memory 211 may be a non-transitory storage medium that may include random access memory (RAM), flash memory, disc memory, and/or read-only memory (ROM), etc. The memory 211 may store the software 212 which may be processor-readable, processor-executable software code containing instructions that may be configured to, when executed, cause the processor 210 to perform various functions described herein. Alternatively, the software 212 may not be directly executable by the processor 210 but may be configured to cause the processor 210, e.g., when compiled and executed, to perform the functions. The description herein may refer to the processor 210 performing a function, but this includes other implementations such as where the processor 210 executes software and/or firmware. The description herein may refer to the processor 210 performing a function as shorthand for one or more of the processors 230-234 performing the function. The description herein may refer to the UE 200 performing a function as shorthand for one or more appropriate components of the UE 200 performing the function. The processor 210 may include a memory with stored instructions in addition to and/or instead of the memory 211. Functionality of the processor 210 is discussed more fully below.

The configuration of the UE 200 shown in FIG. 2 is an example and not limiting of the disclosure, including the claims, and other configurations may be used. For example, an example configuration of the UE may include one or more of the processors 230-234 of the processor 210, the memory 211, and the wireless transceiver 240. Other example configurations may include one or more of the processors 230-234 of the processor 210, the memory 211, a wireless transceiver, and one or more of the sensor(s) 213, the user interface 216, the SPS receiver 217, the camera 218, the PD 219, and/or a wired transceiver.

The UE 200 may comprise the modem processor 232 that may be capable of performing baseband processing of signals received and down-converted by the transceiver 215 and/or the SPS receiver 217. The modem processor 232 may perform baseband processing of signals to be upconverted for transmission by the transceiver 215. Also or alternatively, baseband processing may be performed by the general-purpose/application processor 230 and/or the DSP 231. Other configurations, however, may be used to perform baseband processing.

The UE 200 may include the sensor(s) 213 that may include, for example, an Inertial Measurement Unit (IMU) 270, one or more magnetometers 271, and/or one or more environment sensors 272. The IMU 270 may comprise, for example, one or more accelerometers 273 (e.g., collectively responding to acceleration of the UE 200 in three dimensions) and/or one or more gyroscopes 274 (e.g., three-dimensional gyroscope(s)). The sensor(s) 213 may include the one or more magnetometers 271 (e.g., three-dimensional magnetometer(s)) to determine orientation (e.g., relative to magnetic north and/or true north) that may be used for any of a variety of purposes, e.g., to support one or more compass applications. The environment sensor(s) 272 may comprise, for example, one or more temperature sensors, one or more barometric pressure sensors, one or more ambient light sensors, one or more camera imagers, and/or one or more microphones, etc. The sensor(s) 213 may generate analog and/or digital signals indications of which may be stored in the memory 211 and processed by the DSP 231 and/or the general-purpose/application processor 230 in support of one or more applications such as, for example, applications directed to positioning and/or navigation operations. The sensor(s) 213 may comprise one or more of other various types of sensors such as one or more optical sensors, one or more weight sensors, and/or one or more radio frequency (RF) sensors, etc.

The sensor(s) 213 may be used in relative location measurements, relative location determination, motion determination, etc. Information detected by the sensor(s) 213 may be used for motion detection, relative displacement, dead reckoning, sensor-based location determination, and/or sensor-assisted location determination. The sensor(s) 213 may be useful to determine whether the UE 200 is fixed (stationary) or mobile and/or whether to report certain useful information to the LMF 120 regarding the mobility of the UE 200. For example, based on the information obtained/measured by the sensor(s) 213, the UE 200 may notify/report to the LMF 120 that the UE 200 has detected movements or that the UE 200 has moved, and may report the relative displacement/distance (e.g., via dead reckoning, or sensor-based location determination, or sensor-assisted location determination enabled by the sensor(s) 213). In another example, for relative positioning information, the sensors/IMU may be used to determine the angle and/or orientation of the other device with respect to the UE 200, etc.

The IMU 270 may be configured to provide measurements about a direction of motion and/or a speed of motion of the UE 200, which may be used in relative location determination. For example, the one or more accelerometers 273 and/or the one or more gyroscopes 274 of the IMU 270 may detect, respectively, a linear acceleration and a speed of rotation of the UE 200. The linear acceleration and speed of rotation measurements of the UE 200 may be integrated over time to determine an instantaneous direction of motion as well as a displacement of the UE 200. The instantaneous direction of motion and the displacement may be integrated to track a location of the UE 200. For example, a reference location of the UE 200 may be determined, e.g., using the SPS receiver 217 (and/or by some other means) for a moment in time and measurements from the accelerometer(s) 273 and the gyroscope(s) 274 taken after this moment in time may be used in dead reckoning to determine present location of the UE 200 based on movement (direction and distance) of the UE 200 relative to the reference location.

The magnetometer(s) 271 may determine magnetic field strengths in different directions which may be used to determine orientation of the UE 200. For example, the orientation may be used to provide a digital compass for the UE 200. The magnetometer(s) may include a two-dimensional magnetometer configured to detect and provide indications of magnetic field strength in two orthogonal dimensions. The magnetometer(s) 271 may include a three-dimensional magnetometer configured to detect and provide indications of magnetic field strength in three orthogonal dimensions. The magnetometer(s) 271 may provide means for sensing a magnetic field and providing indications of the magnetic field, e.g., to the processor 210.

The transceiver 215 may include a wireless transceiver 240 and a wired transceiver 250 configured to communicate with other devices through wireless connections and wired connections, respectively. For example, the wireless transceiver 240 may include a wireless transmitter 242 and a wireless receiver 244 coupled to an antenna 246 for transmitting (e.g., on one or more uplink channels and/or one or more sidelink channels) and/or receiving (e.g., on one or more downlink channels and/or one or more sidelink channels) wireless signals 248 and transducing signals from the wireless signals 248 to wired (e.g., electrical and/or optical) signals and from wired (e.g., electrical and/or optical) signals to the wireless signals 248. The wireless transmitter 242 includes appropriate components (e.g., a power amplifier and a digital-to-analog converter). The wireless receiver 244 includes appropriate components (e.g., one or more amplifiers, one or more frequency filters, and an analog-to-digital converter). The wireless transmitter 242 may include multiple transmitters that may be discrete components or combined/integrated components, and/or the wireless receiver 244 may include multiple receivers that may be discrete components or combined/integrated components. The wireless transceiver 240 may be configured to communicate signals (e.g., with TRPs and/or one or more other devices) according to a variety of radio access technologies (RATs) such as 5G New Radio (NR), GSM (Global System for Mobiles), UMTS (Universal Mobile Telecommunications System), AMPS (Advanced Mobile Phone System), CDMA (Code Division Multiple Access), WCDMA (Wideband CDMA), LTE (Long Term Evolution), LTE Direct (LTE-D), 3GPP LTE-V2X (PC5), IEEE 802.11 (including IEEE 802.11p), WiFi^{®}, WiFi^{®} Direct (WiFi^{®}-D), Bluetooth^{®}, Zigbee^{®} etc. New Radio may use mm-wave frequencies and/or sub-6GHz frequencies. The wired transceiver 250 may include a wired transmitter 252 and a wired receiver 254 configured for wired communication, e.g., a network interface that may be utilized to communicate with the NG-RAN 135 to send communications to, and receive communications from, the NG-RAN 135. The wired transmitter 252 may include multiple transmitters that may be discrete components or combined/integrated components, and/or the wired receiver 254 may include multiple receivers that may be discrete components or combined/integrated components. The wired transceiver 250 may be configured, e.g., for optical communication and/or electrical communication. The transceiver 215 may be communicatively coupled to the transceiver interface 214, e.g., by optical and/or electrical connection. The transceiver interface 214 may be at least partially integrated with the transceiver 215. The wireless transmitter 242, the wireless receiver 244, and/or the antenna 246 may include multiple transmitters, multiple receivers, and/or multiple antennas, respectively, for sending and/or receiving, respectively, appropriate signals.

The user interface 216 may comprise one or more of several devices such as, for example, a speaker, microphone, display device, vibration device, keyboard, touch screen, etc. The user interface 216 may include more than one of any of these devices. The user interface 216 may be configured to enable a user to interact with one or more applications hosted by the UE 200. For example, the user interface 216 may store indications of analog and/or digital signals in the memory 211 to be processed by DSP 231 and/or the general-purpose/application processor 230 in response to action from a user. Similarly, applications hosted on the UE 200 may store indications of analog and/or digital signals in the memory 211 to present an output signal to a user. The user interface 216 may include an audio input/output (I/O) device comprising, for example, a speaker, a microphone, digital-to-analog circuitry, analog-to-digital circuitry, an amplifier and/or gain control circuitry (including more than one of any of these devices). Other configurations of an audio I/O device may be used. Also or alternatively, the user interface 216 may comprise one or more touch sensors responsive to touching and/or pressure, e.g., on a keyboard and/or touch screen of the user interface 216.

The SPS receiver 217 (e.g., a Global Positioning System (GPS) receiver) may be capable of receiving and acquiring SPS signals 260 via an SPS antenna 262. The SPS antenna 262 is configured to transduce the SPS signals 260 from wireless signals to wired signals, e.g., electrical or optical signals, and may be integrated with the antenna 246. The SPS receiver 217 may be configured to process, in whole or in part, the acquired SPS signals 260 for estimating a location of the UE 200. For example, the SPS receiver 217 may be configured to determine location of the UE 200 by trilateration using the SPS signals 260. The general-purpose/application processor 230, the memory 211, the DSP 231 and/or one or more specialized processors (not shown) may be utilized to process acquired SPS signals, in whole or in part, and/or to calculate an estimated location of the UE 200, in conjunction with the SPS receiver 217. The memory 211 may store indications (e.g., measurements) of the SPS signals 260 and/or other signals (e.g., signals acquired from the wireless transceiver 240) for use in performing positioning operations. The general-purpose/application processor 230, the DSP 231, and/or one or more specialized processors, and/or the memory 211 may provide or support a location engine for use in processing measurements to estimate a location of the UE 200.

The UE 200 may include the camera 218 for capturing still or moving imagery. The camera 218 may comprise, for example, an imaging sensor (e.g., a charge coupled device or a CMOS (Complementary Metal-Oxide Semiconductor) imager), a lens, analog-to-digital circuitry, frame buffers, etc. Additional processing, conditioning, encoding, and/or compression of signals representing captured images may be performed by the general-purpose/application processor 230 and/or the DSP 231. Also or alternatively, the video processor 233 may perform conditioning, encoding, compression, and/or manipulation of signals representing captured images. The video processor 233 may decode/decompress stored image data for presentation on a display device (not shown), e.g., of the user interface 216.

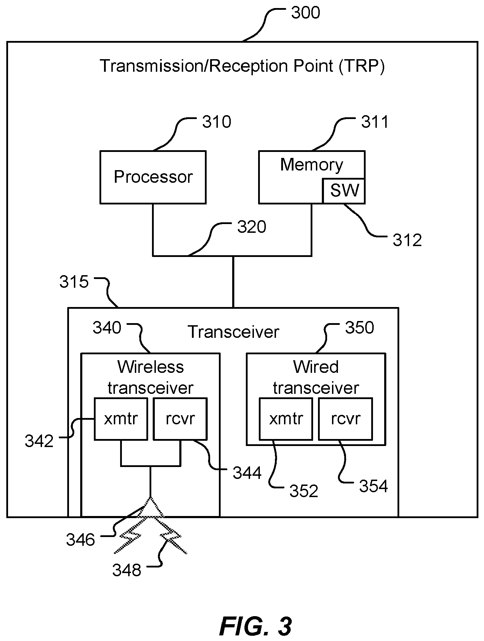

Referring also to FIG. 3, an example of a TRP 300 of the gNBs 110a, 110b and/or the ng-eNB 114 comprises a computing platform including a processor 310, memory 311 including software (SW) 312, and a transceiver 315. The processor 310, the memory 311, and the transceiver 315 may be communicatively coupled to each other by a bus 320 (which may be configured, e.g., for optical and/or electrical communication). One or more of the shown apparatus (e.g., a wireless transceiver) may be omitted from the TRP 300. The processor 310 may include one or more hardware devices, e.g., a central processing unit (CPU), a microcontroller, an application specific integrated circuit (ASIC), etc. The processor 310 may comprise multiple processors (e.g., including a general-purpose/application processor, a DSP, a modem processor, a video processor, and/or a sensor processor as shown in FIG. 2). The memory 311 may be a non-transitory storage medium that may include random access memory (RAM)), flash memory, disc memory, and/or read-only memory (ROM), etc. The memory 311 may store the software 312 which may be processor-readable, processor-executable software code containing instructions that are configured to, when executed, cause the processor 310 to perform various functions described herein. Alternatively, the software 312 may not be directly executable by the processor 310 but may be configured to cause the processor 310, e.g., when compiled and executed, to perform the functions.

The description herein may refer to the processor 310 performing a function, but this includes other implementations such as where the processor 310 executes software and/or firmware. The description herein may refer to the processor 310 performing a function as shorthand for one or more of the processors contained in the processor 310 performing the function. The description herein may refer to the TRP 300 performing a function as shorthand for one or more appropriate components (e.g., the processor 310 and the memory 311) of the TRP 300 (and thus of one of the gNBs 110a, 110b and/or the ng-eNB 114) performing the function. The processor 310 may include a memory with stored instructions in addition to and/or instead of the memory 311. Functionality of the processor 310 is discussed more fully below.

The transceiver 315 may include a wireless transceiver 340 and/or a wired transceiver 350 configured to communicate with other devices through wireless connections and wired connections, respectively. For example, the wireless transceiver 340 may include a wireless transmitter 342 and a wireless receiver 344 coupled to one or more antennas 346 for transmitting (e.g., on one or more uplink channels and/or one or more downlink channels) and/or receiving (e.g., on one or more downlink channels and/or one or more uplink channels) wireless signals 348 and transducing signals from the wireless signals 348 to wired (e.g., electrical and/or optical) signals and from wired (e.g., electrical and/or optical) signals to the wireless signals 348. Thus, the wireless transmitter 342 may include multiple transmitters that may be discrete components or combined/integrated components, and/or the wireless receiver 344 may include multiple receivers that may be discrete components or combined/integrated components. The wireless transceiver 340 may be configured to communicate signals (e.g., with the UE 200, one or more other UEs, and/or one or more other devices) according to a variety of radio access technologies (RATs) such as 5G New Radio (NR), GSM (Global System for Mobiles), UMTS (Universal Mobile Telecommunications System), AMPS (Advanced Mobile Phone System), CDMA (Code Division Multiple Access), WCDMA (Wideband CDMA), LTE (Long Term Evolution), LTE Direct (LTE-D), 3GPP LTE-V2X (PC5), IEEE 802.11 (including IEEE 802.11p), WiFi^{®}, WiFi^{®} Direct (WiFi^{®}-D), Bluetooth^{®}, Zigbee^{®} etc. The wired transceiver 350 may include a wired transmitter 352 and a wired receiver 354 configured for wired communication, e.g., a network interface that may be utilized to communicate with the NG-RAN 135 to send communications to, and receive communications from, the LMF 120, for example, and/or one or more other network entities. The wired transmitter 352 may include multiple transmitters that may be discrete components or combined/integrated components, and/or the wired receiver 354 may include multiple receivers that may be discrete components or combined/integrated components. The wired transceiver 350 may be configured, e.g., for optical communication and/or electrical communication. In other examples, communication between network entities may be wireless.

The configuration of the TRP 300 shown in FIG. 3 is an example and not limiting of the disclosure, including the claims, and other configurations may be used. For example, the description herein discusses that the TRP 300 may be configured to perform or performs several functions, but one or more of these functions may be performed by the LMF 120 and/or the UE 200 (i.e., the LMF 120 and/or the UE 200 may be configured to perform one or more of these functions).

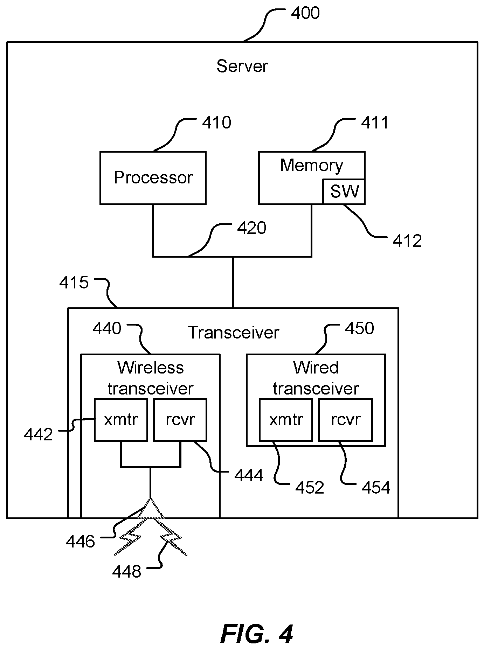

Referring also to FIG. 4, a server 400, of which the LMF 120 may be an example, may comprise a computing platform including a processor 410, memory 411 including software (SW) 412, and a transceiver 415. The processor 410, the memory 411, and the transceiver 415 may be communicatively coupled to each other by a bus 420 (which may be configured, e.g., for optical and/or electrical communication). One or more of the shown apparatus (e.g., a wireless transceiver) may be omitted from the server 400. The processor 410 may include one or more hardware devices, e.g., a central processing unit (CPU), a microcontroller, an application specific integrated circuit (ASIC), etc. The processor 410 may comprise multiple processors (e.g., including a general-purpose/application processor, a DSP, a modem processor, a video processor, and/or a sensor processor as shown in FIG. 2). The memory 411 may be a non-transitory storage medium that may include random access memory (RAM)), flash memory, disc memory, and/or read-only memory (ROM), etc. The memory 411 may store the software 412 which may be processor-readable, processor-executable software code containing instructions that are configured to, when executed, cause the processor 410 to perform various functions described herein. Alternatively, the software 412 may not be directly executable by the processor 410 but may be configured to cause the processor 410, e.g., when compiled and executed, to perform the functions. The description herein may refer to the processor 410 performing a function, but this includes other implementations such as where the processor 410 executes software and/or firmware. The description herein may refer to the processor 410 performing a function as shorthand for one or more of the processors contained in the processor 410 performing the function. The description herein may refer to the server 400 performing a function as shorthand for one or more appropriate components of the server 400 performing the function. The processor 410 may include a memory with stored instructions in addition to and/or instead of the memory 411. Functionality of the processor 410 is discussed more fully below.

The transceiver 415 may include a wireless transceiver 440 and/or a wired transceiver 450 configured to communicate with other devices through wireless connections and wired connections, respectively. For example, the wireless transceiver 440 may include a wireless transmitter 442 and a wireless receiver 444 coupled to one or more antennas 446 for transmitting (e.g., on one or more downlink channels) and/or receiving (e.g., on one or more uplink channels) wireless signals 448 and transducing signals from the wireless signals 448 to wired (e.g., electrical and/or optical) signals and from wired (e.g., electrical and/or optical) signals to the wireless signals 448. Thus, the wireless transmitter 442 may include multiple transmitters that may be discrete components or combined/integrated components, and/or the wireless receiver 444 may include multiple receivers that may be discrete components or combined/integrated components. The wireless transceiver 440 may be configured to communicate signals (e.g., with the UE 200, one or more other UEs, and/or one or more other devices) according to a variety of radio access technologies (RATs) such as 5G New Radio (NR), GSM (Global System for Mobiles), UMTS (Universal Mobile Telecommunications System), AMPS (Advanced Mobile Phone System), CDMA (Code Division Multiple Access), WCDMA (Wideband CDMA), LTE (Long Term Evolution), LTE Direct (LTE-D), 3GPP LTE-V2X (PC5), IEEE 802.11 (including IEEE 802.11p), WiFi^{®}, WiFi^{®} Direct (WiFi^{®}-D), Bluetooth^{®}, Zigbee^{®} etc. The wired transceiver 450 may include a wired transmitter 452 and a wired receiver 454 configured for wired communication, e.g., a network interface that may be utilized to communicate with the NG-RAN 135 to send communications to, and receive communications from, the TRP 300, for example, and/or one or more other network entities. The wired transmitter 452 may include multiple transmitters that may be discrete components or combined/integrated components, and/or the wired receiver 454 may include multiple receivers that may be discrete components or combined/integrated components. The wired transceiver 450 may be configured, e.g., for optical communication and/or electrical communication. In other examples, communication between two or more network entities may be wireless.

The description herein may refer to the processor 410 performing a function, but this includes other implementations such as where the processor 410 executes software (stored in the memory 411) and/or firmware. The description herein may refer to the server 400 performing a function as shorthand for one or more appropriate components (e.g., the processor 410 and the memory 411) of the server 400 performing the function.

The configuration of the server 400 shown in FIG. 4 is an example and not limiting of the disclosure, including the claims, and other configurations may be used. For example, the wireless transceiver 440 may be omitted. Also or alternatively, the description herein discusses that the server 400 is configured to perform or performs several functions, but one or more of these functions may be performed by the TRP 300 and/or the UE 200 (i.e., the TRP 300 and/or the UE 200 may be configured to perform one or more of these functions).

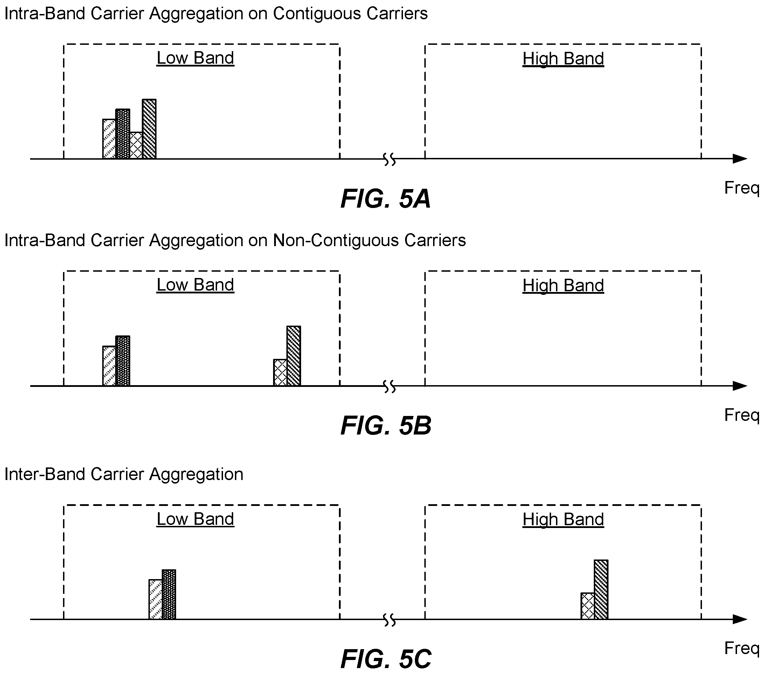

Referring to FIGS. 5A-5C, three examples of carrier aggregation (CA) are shown. Wireless nodes in the communication system 100 may be configured to utilize CA to improve connectivity between the nodes. In general, CA may be categorized into two types: intra-band CA and inter-band CA. Intra-band CA refers to operation on multiple carriers within the same band and inter-band CA refers to operation on multiple carriers in different bands. FIGS. 5A-5C include example low and high band designations. In a mmWave use case, the low bands may correspond to 24.25GHz to 29.5GHz (e.g., bands n257, n258, n261), and the high bands may correspond to 37.0GHz to 43.5GHz (e.g., bands n259, n260). Other frequency ranges may also be designated as within the low and high bands, for example n262 (47.2GHz to 48.2GHz) being in the high band.

FIG. 5A shows an example of contiguous intra-band CA. In the example shown in FIG. 5A, a wireless node (e.g., a UE 200, a TRP 300) is configured with four contiguous carriers in the same band, which is a low-band. The wireless device may send and/or receive transmissions on multiple contiguous carriers within the same band. In a mmWave use case, the channel bandwidths may be 50MHz, 100MHz, 200MHz, and 400MHz. Other bandwidths may also be defined, and a greater or fewer number of carriers may be utilized.

FIG. 5B shows an example of non-contiguous intra-band CA. In the example shown in FIG. 5B, the wireless node is configured with four non-contiguous carriers in the same band, which is the low-band. The carriers may be separated by 50 MHz, 100 MHz, or some other amount. The wireless device may send and/or receive transmissions on multiple non-contiguous carriers within the same band. Two groups of two carriers may be implemented, as illustrated, but other groupings and/or quantity of carriers may be used.

FIG. 5C shows an example of inter-band CA in different band groups. In the example shown in FIG. 5C, the wireless node is configured with four carriers in two bands in different band groups, which include two carriers in one band in low-band and two additional carriers in another band in high-band. The wireless device may send and/or receive transmissions on multiple carriers in different bands in different band groups (e.g., low-band and high-band in FIG. 5C). Two groups of two carriers may be implemented, as illustrated, but other groupings and/or quantity of carriers may be used. FIGS. 5A to 5C show three examples of carrier aggregation. Carrier aggregation may also be supported for other combinations of bands and band groups. For example, carrier aggregation may be supported for low-band and high-band, mid-band and high-band, high-band and high-band, and other band combinations with ultra-high band and long term evolution in unlicensed spectrum (LTE-U).

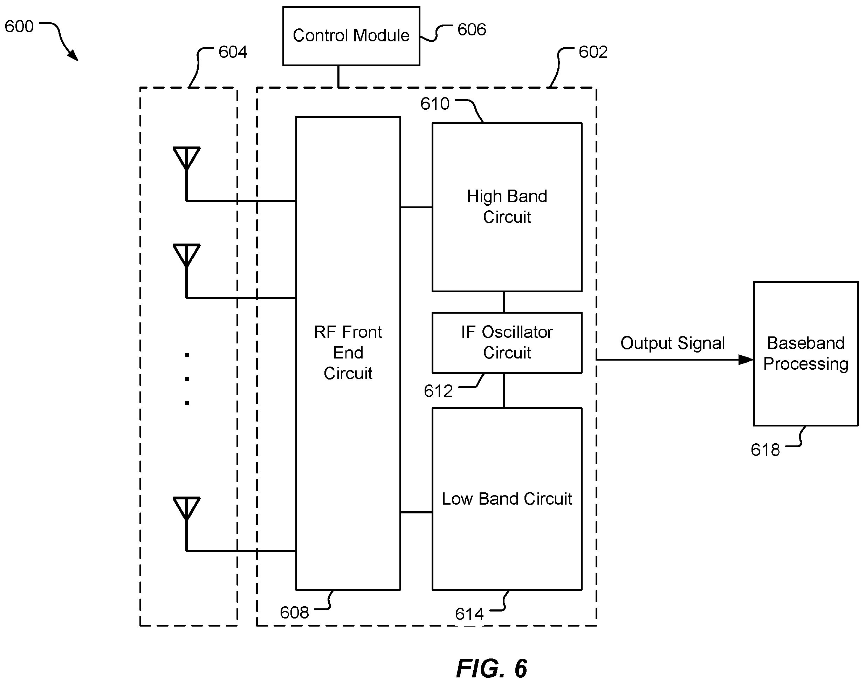

Referring to FIG. 6, a block diagram of an example radio frequency receiver 600 including a high band receiver circuit and a low band receiver circuit is shown. The receiver 600 is an example of a down-converter configured to utilize a front end scheme to select a destination signal and another scheme (e.g., a heterodyne scheme) to convert a received radio frequency (RF) signal to an intermediate frequency (IF) signal, instead of directly converting the RF signal to a baseband (BB) signal. The transceiver 240 (e.g., the receiver 244) in the UE 200, the transceiver 340 (e.g., the receiver 344) in the TRP 300, and the transceiver 440 (e.g., the receiver 444) in the server 400 may be based on the heterodyne scheme of the receiver 600. The receiver 600 may include an antenna circuit 604, a receiver circuit 602, and a control circuit 606. In an example, the antenna circuit 602 may include one or more antenna arrays and may be disposed in a different location than the receiver circuit 602. The receiver circuit 602 may be included in a radio frequency integrated circuit (RFIC) and may be operably coupled to the antenna circuit 604 via one or more cables. In another example, the antenna circuit 604 and the receiver circuit 602 may be integrated components in a system-on-chip (SoC) and/or module configuration. The control circuit 606 may be operably coupled to, or included within, the receiver circuit 602. The control circuit 606 may be configured to cause the receiver circuit 602 to operate in the CA and non-CA modes as described herein. The receiver circuit 602 may include RF front end circuits 608, a high band circuit 610, a low band circuit 614, and an IF oscillator circuit 612. The receiver circuit 602 is configured to provide an output for baseband processing at stage 618. In an example, the modem processor 232 may be configured to perform the baseband processing. One or more components and/or circuits may be disposed between the receiver circuit 602 and the modem processor 232, for example circuitry configured to downconvert IF signals to baseband and to convert analog baseband signals to digital. The high band circuit 610 may function as the high band receive chain, and the low band circuit 614 may function as the low band receive chain in the receiver 600. The circuits in the receiver circuit 602 are examples, and not limitations, as other receiver architectures may be used.

In operation, received RF signals from the antenna circuit 604 may be fed into the RF front end circuit 608, which consists of components such as low noise amplifiers (LNAs) and phase shifters. Certain components of the RF front end circuit 608 in combination with several of the antennas in the antenna circuit 604 may be configured to implement a phased array (e.g., a phased array for low-band and/or a phased array for high-band). The RF front end circuit 608 may be configured to provide signals in two paths: one for the high band circuit 610 and the other for the low band circuit 614. The high band circuit 610 and the low band circuit 614 each include mixers and respective dedicated signal paths and frequency downconversion stages. These stages may be configured to perform frequency conversion to an intermediate frequency (IF) suitable for subsequent processing. The high band circuit 610 may be configured to downconvert the high-frequency signals from the RF front end circuit 608 to a high IF frequency or a low IF frequency, as described further below. In a mmWave use case, the high IF frequency may be in a range of 10GHz to 14GHz, but other high IF frequency values may be used based on system design options. The low band circuit 614 may be configured to downconvert the low-frequency signals from the RF front end circuit 608 to a low IF frequency. In an example, the low IF frequency may be in a range of 8GHz to 10GHz, but other low IF frequency values may be used. The IF oscillator circuit 612 may include one or more LOs configured to generate the required IF frequencies for the high band and low band circuits 610, 614. In an example, the functions and components of the IF oscillator circuit 612 may be included in the respective high and low band circuits 610, 614. After the downconversion, the signals may be further processed at stage 618 (e.g., with the modem processor 232). In an example, the baseband processing at stage 618 may include known operations such as filtering, demodulation, analog to digital conversion, decoding, and other digital signal processing operations. The processed signals are provided as output signals of the receiver system.

In an example, the IF oscillator circuit 612 may include multiple (e.g., two) local oscillators (LOs) and a filter. The filter may be adjustable (during operation) by, for example, adjusting the passive devices that make up the filter. Multiple LOs may be used to place the center frequency of the filter at any desired frequency determined by the LO frequency. As an example, and not a limitation, the center frequencies for the respective low band and high band signals may be 9GHz and 12GHz.

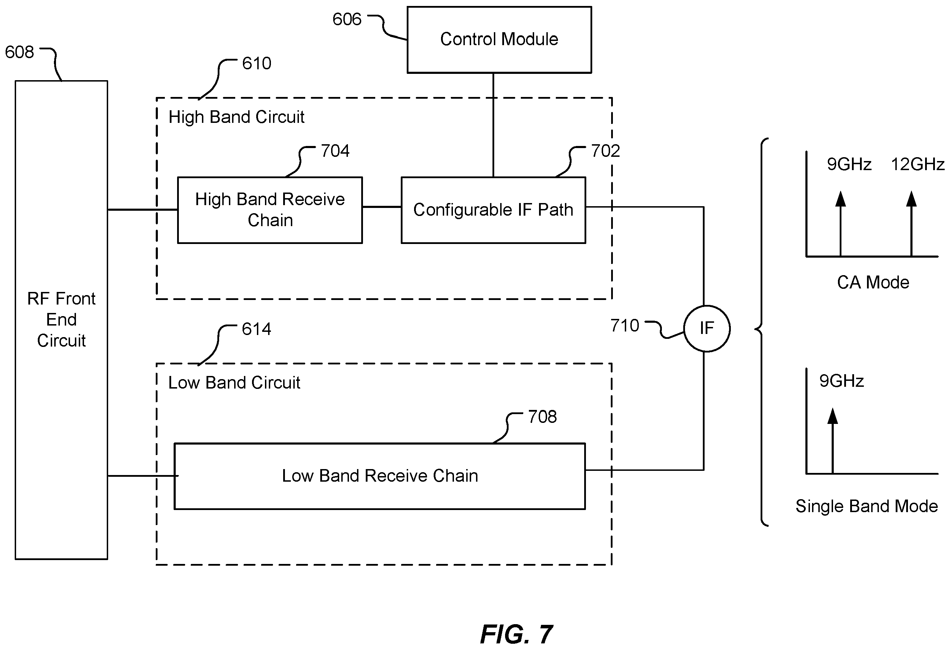

Referring to FIG. 7, a block diagram of an example high band circuit 610 with a configurable intermediate frequency (IF) path 702 is shown. The high band circuit 610 may include the configurable IF path 702 and a high band receive chain 704. The high band receive chain 704 may include multiplexers, LNAs or VGAs or other amplifiers, and associated components configured to perform the downconversion of the high band signals based on a selected IF frequency. A low band receive chain 708 in the low band circuit 614 may include multiplexers, LNAs or VGAs or other amplifiers, and associated components configured to perform downconversion of the low band signal based on a (e.g., fixed) IF frequency (e.g. in the range of 8GHz - 10GHz). An IF output 710 may include multiple frequencies in CA mode, or a single frequency when in the single band mode. In operation, the high band IF path is configurable based on whether the control circuit 606 indicates the receiver 600 is in a CA-mode or a single band mode (i.e., non-CA mode). The high band IF path may operate at a high IF frequency of approximately 12GHz when the receiver 600 is in CA mode, and approximately 9GHz when in the single band mode. The reduction of the IF frequency in the high band circuit 610 may enable power savings based on the reduced processing requirements for the relatively lower frequency signal, as well as increases in component efficiency at lower frequencies. This power savings and component efficiency may be achieved in the receiver 602 and in one or more downstream components, for example in a transceiver circuit configured to downconvert the IF signals to baseband. Thus, while in CA-mode, the high band circuit 610 may utilize an IF frequency of 12GHz, and the low band circuit 614 may utilize an IF frequency of 9GHz. In single band mode (i.e. non-CA mode), either the high band circuit 610 or the low band circuit 614 (or both, for example in a time duplex manner) may utilize the 9GHz IF frequency.

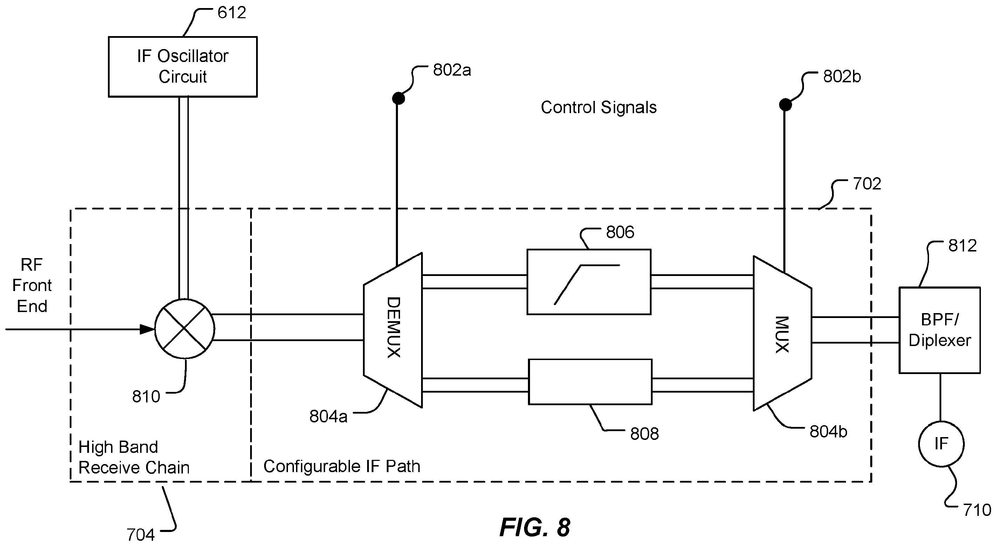

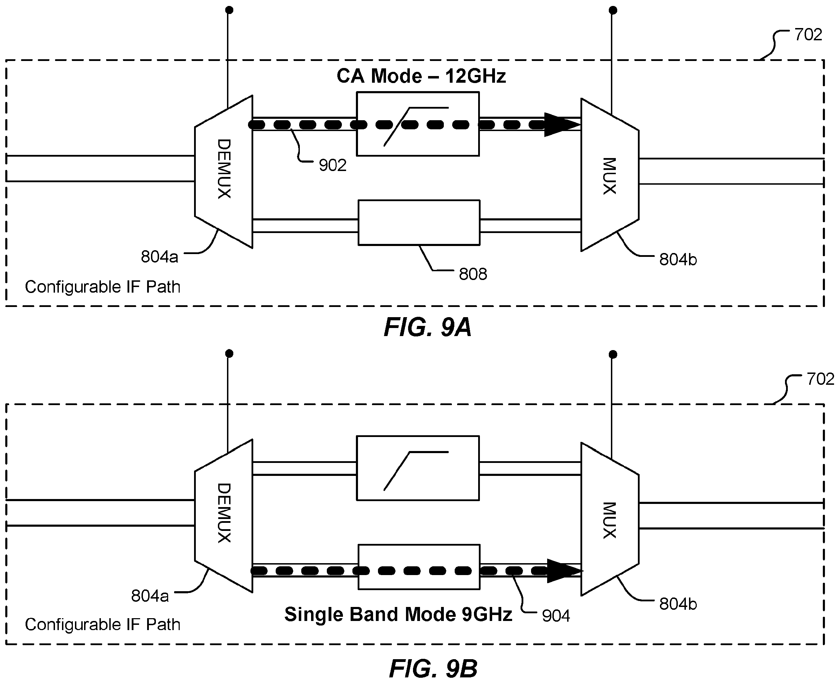

Referring to FIG. 8, a system diagram of an example configurable IF path 702 in the high band receiver of FIG. 7 is shown. In operation, a mixer 810 is configured to receive signals from the RF Front End circuits 608 and the LOs in the IF oscillator circuit 612. The LOs may be configured to generate a frequency input based on the mode of operation. For example, in the range of 10GHz - 14GHz for CA mode, and 8GHz - 10GHz for single band mode. The configurable IF path 702 may be configured to receive one or more control signals 802a-802b to enable the selection of paths through the high band circuit 610 based on the selected mode. The control signals 802a-802b may be operably coupled to respective multiplexers 804a-804b (e.g., demultiplexer and multiplexer). The control circuit 606 may be configured to provide the control signals 802a-802b. Other controllers within or coupled to the receiver 600 may be configured to provide the control signals 802a-802b. In a CA-mode, referring to FIG. 9A, the multiplexers 804a-804b are configured to utilize a first IF path 902 including a high pass filter 806. In CA-mode the high band IF carrier is on a higher frequency (e.g., 11-14 GHz) than the low band IF signal (e.g., 8-10 GHz). The high pass filter 806 may be required to provide noise filtering and isolation from jamming caused by the low band signals. In an example, the high pass filter 806 may be a high order LC filter with multiple inductors and programable capacitors. The performance (e.g., cutoff point, bandwidth, etc.) of the high pass filter 806 may be selectable and configured for a range of possible IF frequencies. In an example, the configurable IF path 702 may include a plurality of high pass filters coupled to the multiplexers 804a-804b and the control signals 802a-802b may be configured to select one or more of the plurality of high pass filters. In a non-CA mode (e.g., single band mode), referring to FIG. 9B, the multiplexers 804a-804b are configured to utilize a second IF path 904 to by-pass the high pass filter 806. The second IF path 904 may include a transmission line (Tline) with AC coupling capacitors, and is configured to operate at the low IF frequency with amplifiers. In the non-CA mode, both the high band circuit 610 and the low band circuit 614 utilize the lower IF frequency (e.g., 9GHz) while only one circuit operates at a time. In an example, the lower IF frequency may be selected to support legacy CA configuration requirements. The IF frequencies, high pass filter 806 design, and by-pass components 808 (e.g., transmission lines, amplifiers, and/or other components, such as a filter in other examples) are examples only, and not limitations, as different receivers may implement the configurable IF path 702 described herein for different IF frequencies and may require different filter designs.

The configurable IF path 702 may output an IF signal to additional amplifier and filter (e.g., a band pass filter) and diplexer circuits 812 prior to being output for baseband processing. Other circuits, such as attenuator circuits, may be used to form the IF signal prior to baseband processing.

While FIGS. 7-9B described filtering and by-pass configurations for operating the high band circuit 610 with different IF frequencies, the design may be extended to the low band circuit 614. For example, the low-band circuit 610 may include a configurable IF path 702 including a filtered path and a by-pass which are functionally similar to the first IF path 902 and the second IF path 904. The controller 606 may be configured to have the high band circuit 610 and the low band circuit 614 utilize a high IF frequency for single band operation. The high band circuit 610 may utilize the high IF frequency, and the low band circuit 610 may then utilize a low IF frequency for CA operations. In this use case, the filtered path in the low band circuit 614 may include a low pass filter to enable differentiation with the high IF frequency.

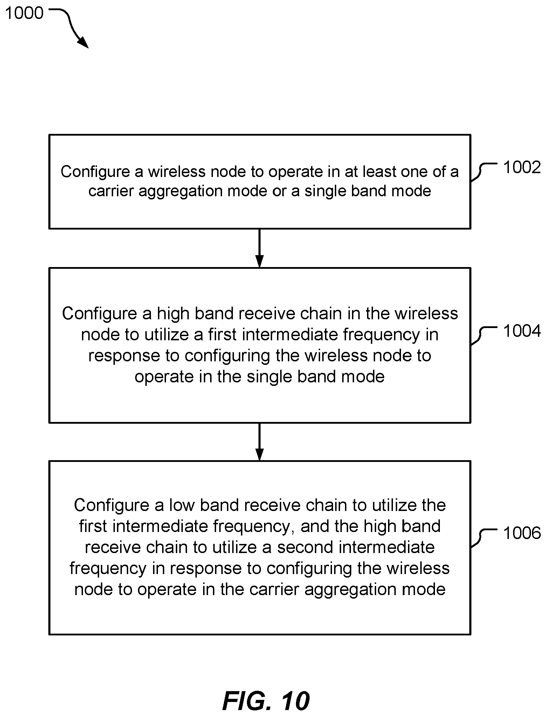

Referring to FIG. 10, with further reference to FIGS. 1-9B, a method 1000 for operating a wireless node in a carrier aggregation mode or a single band mode includes the stages shown. The method 1000 is, however, an example only and not limiting. The method 1000 may be altered, e.g., by having one or more stages added, removed, rearranged, combined, performed concurrently, and/or by having one or more single stages split into multiple stages.

At stage 1002, the method includes configuring the wireless node to operate in at least one of a carrier aggregation mode or a single band mode. A UE 200, including a transceiver 215 and the processors 210 is a means for configuring the wireless node to operate in a CA mode or a single band mode (i.e., non-CA mode). The transceiver 215 may include the wireless transceiver 240, including the receiver 244. The receiver 240 may be the receiver 600 with the configurable IF path 702. In a 5G NR use case, the UE 200 may be configured to receive network signaling to indicate the opportunity to utilize CA and may configure the receiver 244 for CA mode. In an example, a software or firmware application stored in the memory 211 may be configured to send a configuration indication to select the CA mode or the non-CA mode. In an example, the processors 210 may be the control circuit 606 and configured to provide a signal to the multiplexers 804a-804b to utilize either the first IF path 902 (e.g., CA-mode), or the second IF path 904 (e.g., single band mode).

At stage 1004, the method includes configuring a high band receive chain and optionally a low band receive chain in the wireless node to utilize a first intermediate frequency in response to configuring the wireless node to operate in the single band mode. The UE 200, including the processors 210 is a means for configuring the high band receive chain and the low band receive chain. In an example, the UE 200 may select a non-CA mode and configure the multiplexers 804a-804b to utilize the second IF path 904 in the configurable IF path 702. As a result, either the low band circuit 614 or the high band circuit 610 will be configured to utilize the lower IF frequency (e.g., 9GHz). In an example, the high band receive chain may be configured to utilize the first IF frequency, and the low band receive chain may be placed in a low power state (e.g., turned off and/or configured not to receive). The selection of the non-CA mode may be based on legacy single band requirements. While in the non-CA mode, the high band circuit 610 is utilizing the lower IF frequency and thus may realize power savings based on the reduction of processing power required for the lower frequency, as well as the increased efficiency of lower frequency components (as compared to processing high frequency signals).

At stage 1006, the method includes configuring the low band receive chain to utilize the first intermediate frequency, and the high band receive chain to utilize a second intermediate frequency in response to configuring the wireless node to operate in the carrier aggregation mode. The UE 200, including the processors 210 is a means for configuring the high band receive chain and the low band receive chain to operate in a CA mode. In an example, the UE 200 may select the CA mode and configure the multiplexers 804a-804b to utilize the first IF path 902 in the configurable IF path 702. The second IF frequency may be 12GHz, or other frequencies to enable the high band receive chain to process the signals separately from the low band signals. The high pass filter 806 is designed to filter noise and other jamming signals associated with the low band signals. In the CA-mode, in an example, the low band circuit 614 will be configured to utilize the lower IF frequency (e.g., 9GHz), and the high band circuit 610 will be configured to utilize the higher IF frequency (e.g., 12GHz).

The method 1000 may be implemented for other dual band modes which do not utilize carrier aggregation and/or utilize different frequency combinations. For example, the high band circuit 610, the low band circuit 614, and the IF oscillator circuit 612 may be configured to operate at other frequencies which are not associated with a carrier aggregation scheme as described in FIGS. 5A-5C. Thus, the high band circuit 610 may switch from using a high IF in a configuration where multiple, non-aggregated carriers are being (concurrently) received to a low IF in a configuration (e.g., single band) in which two IFs are not required. In some examples (which may include a CA mode or may be examples which do not include a CA mode), the low IF used when two IFs are not required is different than the low IF used when two IFs are required. For example, the IFs may be 12GHz and 9GHz when two IFs are used, and the IF may be 10GHz or 8GHz when only one IF is used. In some examples, the high and/or the low IF may be variable. For example, the high IF may not always be 12GHz, but may vary between 11GHz and 14GHz during operation. The frequencies at which the IF are set may depend on carriers assigned by a network, LO capabilities and configurations, frequency plans and/or coexistence, etc.

Other examples implementations are within the scope of the disclosure and appended claims. For example, due to the nature of software and computers, functions described above can be implemented using software executed by a processor, hardware, firmware, hardwiring, or a combination of any of these. Features implementing functions may also be physically located at various positions, including being distributed such that portions of functions are implemented at different physical locations.

As used herein, the singular forms "a," "an," and "the" include the plural forms as well, unless the context clearly indicates otherwise. Thus, reference to a device in the singular (e.g., "a device," "the device"), including in the claims, includes one or more of such devices (e.g., "a processor" includes one or more processors, "the processor" includes one or more processors, "a memory" includes one or more memories, "the memory" includes one or more memories, etc.). The terms "comprises," "comprising," "includes," and/or "including," as used herein, specify the presence of stated features, integers, steps, operations, elements, and/or components, but do not preclude the presence or addition of one or more other features, integers, steps, operations, elements, components, and/or groups thereof.

Also, as used herein, "or" as used in a list of items (possibly prefaced by "at least one of" or prefaced by "one or more of") indicates a disjunctive list such that, for example, a list of "at least one of A, B, or C," or a list of "one or more of A, B, or C" or a list of "A or B or C" means A, or B, or C, or AB (A and B), or AC (A and C), or BC (B and C), or ABC (i.e., A and B and C), or combinations with more than one feature (e.g., AA, AAB, ABBC, etc.). Thus, a recitation that an item, e.g., a processor, is configured to perform a function regarding at least one of A or B, or a recitation that an item is configured to perform a function A or a function B, means that the item may be configured to perform the function regarding A, or may be configured to perform the function regarding B, or may be configured to perform the function regarding A and B. For example, a phrase of "a processor configured to measure at least one of A or B" or "a processor configured to measure A or measure B" means that the processor may be configured to measure A (and may or may not be configured to measure B), or may be configured to measure B (and may or may not be configured to measure A), or may be configured to measure A and measure B (and may be configured to select which, or both, of A and B to measure). Similarly, a recitation of a means for measuring at least one of A or B includes means for measuring A (which may or may not be able to measure B), or means for measuring B (and may or may not be configured to measure A), or means for measuring A and B (which may be able to select which, or both, of A and B to measure). As another example, a recitation that an item, e.g., a processor, is configured to at least one of perform function X or perform function Y means that the item may be configured to perform the function X, or may be configured to perform the function Y, or may be configured to perform the function X and to perform the function Y. For example, a phrase of "a processor configured to at least one of measure X or measure Y" means that the processor may be configured to measure X (and may or may not be configured to measure Y), or may be configured to measure Y (and may or may not be configured to measure X), or may be configured to measure X and to measure Y (and may be configured to select which, or both, of X and Y to measure).

As used herein, unless otherwise stated, a statement that a function or operation is "based on" an item or condition means that the function or operation is based on the stated item or condition and may be based on one or more items and/or conditions in addition to the stated item or condition.

Substantial variations may be made in accordance with specific requirements. For example, customized hardware might also be used, and/or particular elements might be implemented in hardware, software (including portable software, such as applets, etc.) executed by a processor, or both. Further, connection to other computing devices such as network input/output devices may be employed. Components, functional or otherwise, shown in the figures and/or discussed herein as being connected or communicating with each other are communicatively coupled unless otherwise noted. That is, they may be directly or indirectly connected to enable communication between them.

The systems and devices discussed above are examples. Various configurations may omit, substitute, or add various procedures or components as appropriate. For instance, features described with respect to certain configurations may be combined in various other configurations. Different aspects and elements of the configurations may be combined in a similar manner. Also, technology evolves and, thus, many of the elements are examples and do not limit the scope of the disclosure or claims.

A wireless communication system is one in which communications are conveyed wirelessly, i.e., by electromagnetic and/or acoustic waves propagating through atmospheric space rather than through a wire or other physical connection, between wireless communication devices. A wireless communication system (also called a wireless communications system, a wireless communication network, or a wireless communications network) may not have all communications transmitted wirelessly, but is configured to have at least some communications transmitted wirelessly. Further, the term "wireless communication device," or similar term, does not require that the functionality of the device is exclusively, or even primarily, for communication, or that communication using the wireless communication device is exclusively, or even primarily, wireless, or that the device be a mobile device, but indicates that the device includes wireless communication capability (one-way or twoway), e.g., includes at least one radio (each radio being part of a transmitter, receiver, or transceiver) for wireless communication.

Specific details are given in the description herein to provide a thorough understanding of example configurations (including implementations). However, configurations may be practiced without these specific details. For example, well-known circuits, processes, algorithms, structures, and techniques have been shown without unnecessary detail in order to avoid obscuring the configurations. The description herein provides example configurations, and does not limit the scope, applicability, or configurations of the claims. Rather, the preceding description of the configurations provides a description for implementing described techniques. Various changes may be made in the function and arrangement of elements.

The terms "processor-readable medium," "machine-readable medium," and "computer-readable medium," as used herein, refer to any medium that participates in providing data that causes a machine to operate in a specific fashion. Using a computing platform, various processor-readable media might be involved in providing instructions/code to processor(s) for execution and/or might be used to store and/or carry such instructions/code (e.g., as signals). In many implementations, a processor-readable medium is a physical and/or tangible storage medium. Such a medium may take many forms, including but not limited to, non-volatile media and volatile media. Non-volatile media include, for example, optical and/or magnetic disks. Volatile media include, without limitation, dynamic memory.

Having described several example configurations, various modifications, alternative constructions, and equivalents may be used. For example, the above elements may be components of a larger system, wherein other rules may take precedence over or otherwise modify the application of the disclosure. Also, a number of operations may be undertaken before, during, or after the above elements are considered. Accordingly, the above description does not bound the scope of the claims.

Unless otherwise indicated, "about" and/or "approximately" as used herein when referring to a measurable value such as an amount, a temporal duration, and the like, encompasses variations of ±20% or ±10%, ±5%, or +0.1% from the specified value, as appropriate in the context of the systems, devices, circuits, methods, and other implementations described herein. Unless otherwise indicated, "substantially" as used herein when referring to a measurable value such as an amount, a temporal duration, a physical attribute (such as frequency), and the like, also encompasses variations of ±20% or ±10%, ±5%, or +0.1% from the specified value, as appropriate in the context of the systems, devices, circuits, methods, and other implementations described herein.

A statement that a value exceeds (or is more than or above) a first threshold value is equivalent to a statement that the value meets or exceeds a second threshold value that is slightly greater than the first threshold value, e.g., the second threshold value being one value higher than the first threshold value in the resolution of a computing system. A statement that a value is less than (or is within or below) a first threshold value is equivalent to a statement that the value is less than or equal to a second threshold value that is slightly lower than the first threshold value, e.g., the second threshold value being one value lower than the first threshold value in the resolution of a computing system.

## Claims

1. A method (1000) performed by a wireless node in a carrier aggregation mode or a single band mode, comprising:
configuring (1002) the wireless node to operate in at least one of the carrier aggregation mode or the single band mode;
configuring (1004) a high band receive chain in the wireless node to utilize a first intermediate frequency in response to configuring the wireless node to operate in the single band mode; and
configuring (1006) a low band receive chain to utilize the first intermediate frequency, and the high band receive chain to utilize a second intermediate frequency in response to configuring the wireless node to operate in the carrier aggregation mode.

2. The method of claim 1 wherein the wireless node is configured to utilize a millimeter wave spectrum.

3. The method of claim 1 wherein configuring the high band receive chain to utilize the second intermediate frequency includes utilizing a high pass filter in an intermediate frequency path; and
wherein configuring the high band receive chain to utilize the first intermediate frequency includes by-passing the high pass filter in the intermediate frequency path, or
further comprising providing a control signal to a multiplexer to utilize the high pass filter in the intermediate frequency path, wherein the high pass filter is one of a plurality of high filters.

4. The method of claim 1 wherein configuring the wireless node to operate in at least one of the carrier aggregation mode or the single band mode includes receiving a configuration indication from a software or firmware application.

5. A method performed by a wireless node in a carrier aggregation mode or a single band mode, comprising:
configuring the wireless node to operate in at least one of the carrier aggregation mode or the single band mode;
configuring a low band receive chain in the wireless node to utilize a first intermediate frequency in response to configuring the wireless node to operate in the single band mode; and
configuring a high band receive chain to utilize the first intermediate frequency, and the low band receive chain to utilize a second intermediate frequency in response to configuring the wireless node to operate in the carrier aggregation mode.

6. The method of claim 5 wherein configuring the low band receive chain to utilize the second intermediate frequency includes utilizing a low pass filter in an intermediate frequency path; and
further providing a control signal to a multiplexer to utilize the low pass filter in the intermediate frequency path, wherein the low pass filter is one of plurality of low pass filters, or
wherein configuring the low band receive chain to utilize the first intermediate frequency includes by-passing the low pass filter in the intermediate frequency path.

7. An apparatus, comprising;
at least one memory;
at least one receiver (600) comprising a low band circuit (614) and a high band circuit (610) including a configurable intermediate frequency path (702);
at least one processor communicatively coupled to the at least one memory and the at least one receiver, and configured to:
configure the at least one receiver to operate in at least one of a carrier aggregation mode or a single band mode;
configure the high band circuit to utilize a first intermediate frequency in response to configuring the at least one receiver to operate in the single band mode; and
configure the low band circuit to utilize the first intermediate frequency, and the high band circuit to utilize a second intermediate frequency in response to configuring the at least one receiver to operate in the carrier aggregation mode.

8. The apparatus of claim 7 wherein the at least one receiver is configured to receive radio frequency signals in a millimeter wave spectrum.

9. The method of claim 2, or the apparatus of claim 8 wherein the low band circuit is configured to receive radio frequency signals with frequencies less than or equal to 29.5GHz, and the high band circuit is configured to receive radio frequency signals with frequencies greater than 29.5GHz.

10. The method of claim 2, or the apparatus of claim 9 wherein the first intermediate frequency is less than or equal to 11GHz, and the second intermediate frequency is greater than 11GHz.

11. The method of claim 10, or the apparatus of claim 10 wherein the first intermediate frequency is approximately 9GHz and within a range of 8-10GHz, and the second intermediate frequency is approximately 12GHz and within a range of 11-14GHz.

12. The apparatus of claim 7 wherein the at least one processor is further configured to select the configurable intermediate frequency path which includes a high pass filter; and
wherein the at least one processor is further configured to provide a control signal to a multiplexer to select the high pass filter from a plurality of high pass filters, or
wherein the at least one processor is further configured to select the configurable intermediate frequency path which by-passes the high pass filter.

13. The apparatus of claim 7 wherein the at least one processor is further configured to receive a configuration indication from a software or firmware application.

14. An apparatus, comprising:
at least one memory;
at least one receiver (600) comprising a high band circuit (610) and a low band circuit (614) including a configurable intermediate frequency path;
at least one processor communicatively coupled to the at least one memory and the at least one receiver, and configured to:
configure the at least one receiver to operate in at least one of a carrier aggregation mode or a single band mode;
configure the low band circuit to utilize a first intermediate frequency in response to configuring the at least one receiver to operate in the single band mode; and
configure the high band circuit to utilize the first intermediate frequency, and the low band circuit to utilize a second intermediate frequency in response to configuring the at least one receiver to operate in the carrier aggregation mode.

15. The apparatus of claim 14 wherein the at least one processor is further configured to select the configurable intermediate frequency path which includes a low pass filter; and
wherein the at least one processor is further configured to provide a control signal to a multiplexer to utilize the low pass filter in an intermediate frequency path, wherein the low pass filter is one of a plurality of low pass filters, or
wherein the at least one processor is further configured to select the configurable intermediate frequency path which by-passes the low pass filter.

## Patentansprüche

1. Ein Verfahren (1000), das durch einen Drahtlosknoten in einem Trägeraggregationsmodus oder einem Einzelbandmodus durchgeführt wird, das Folgendes aufweist:
Konfigurieren (1002) des Drahtlosknotens, so dass er in wenigstens einem von dem Trägeraggregationsmodus oder dem Einzelbandmodus arbeitet;
Konfigurieren (1004) einer Hochband-Empfangskette in dem Drahtlosknoten zum Nutzen einer ersten intermediären Frequenz bzw. Zwischenfrequenz ansprechend auf Konfigurieren des Drahtlosknotens, in dem Einzelbandmodus zu arbeiten; und
Konfigurieren (1006) einer Niederband-Empfangskette zum Nutzen der ersten Zwischenfrequenz, und der Hochband-Empfangskette zum Nutzen einer zweiten Zwischenfrequenz ansprechend auf Konfigurieren des Drahtlosknotens, in dem Trägeraggregationsmodus zu arbeiten.

2. Verfahren nach Anspruch 1, wobei der Drahtlosknoten konfiguriert ist, ein Millimeterwellenspektrum zu nutzen.

3. Verfahren nach Anspruch 1, wobei Konfigurieren der Hochband-Empfangskette zum Nutzen der zweiten Zwischenfrequenz, Nutzen eines Hochpassfilters in einem Zwischenfrequenzpfad aufweist; und
wobei Konfigurieren der Hochband-Empfangskette zum Nutzen der ersten Zwischenfrequenz Umgehen des Hochpassfilters in dem Zwischenfrequenzpfad aufweist, oder
das weiter Vorsehen eines Steuersignals an einen Multiplexer zum Nutzen des Hochpassfilters in dem Zwischenfrequenzpfad aufweist, wobei das Hochpassfilter eines einer Vielzahl von Hochfiltern ist.

4. Verfahren nach Anspruch 1, wobei Konfigurieren des Drahtlosknotens zum Arbeiten in wenigstens einem von dem Trägeraggregationsmodus oder dem Einzelbandmodus Empfangen einer Konfigurationsanzeige von einer Software- oder Firmware-Anwendung aufweist.

5. Ein Verfahren, das durch einen Drahtlosknoten in einem Trägeraggregationsmodus oder einem Einzelbandmodus durchgeführt wird, das Folgendes aufweist:
Konfigurieren des Drahtlosknotens in wenigstens einem von dem Trägeraggregationsmodus oder dem Einzelbandmodus zu arbeiten;
Konfigurieren einer Niederbandempfangskette in dem Drahtlosknoten zum Nutzen einer ersten Zwischenfrequenz ansprechend auf Konfigurieren des Drahtlosknotens, in dem Einzelbandmodus zu arbeiten; und
Konfigurieren einer Hochbandempfangskette zum Nutzen der ersten Zwischenfrequenz, und der Niederbandempfangskette zum Nutzen einer zweiten Zwischenfrequenz ansprechend auf Konfigurieren des Drahtlosknotens, in dem Trägeraggregationsmodus zu arbeiten.

6. Verfahren nach Anspruch 5, wobei Konfigurieren der Niederbandempfangskette zum Nutzen der zweiten Zwischenfrequenz, Nutzen eines Tiefpassfilters in einem Zwischenfrequenzpfad aufweist; und
weiter Vorsehen eines Steuersignals an einen Multiplexer zum Nutzen des Tiefpassfilters in dem Zwischenfrequenzpfad, wobei das Tiefpassfilter eines einer Vielzahl von Tiefpassfiltern ist, oder
wobei Konfigurieren der Niederbandempfangskette zum Nutzen der ersten Zwischenfrequenz Umgehen des Tiefpassfilters in dem Zwischenfrequenzpfad aufweist.

7. Eine Vorrichtung, die Folgendes aufweist:
wenigstens einen Speicher;
wenigstens einen Empfänger (600), der eine Niederbandschaltung (614) und eine Hochbandschaltung (610) einschließlich eines konfigurierbaren Zwischenfrequenzpfades (702) aufweist;
wenigstens einen Prozessor, der kommunikativ an den wenigstens einen Speicher und den wenigstens einen Empfänger gekoppelt ist, und konfiguriert ist zum:
Konfigurieren des wenigstens einen Empfängers, in wenigstens einem von einem Trägeraggregationsmodus oder einem Einzelbandmodus zu arbeiten;
Konfigurieren der Hochbandschaltung zum Nutzen einer ersten intermediären Frequenz bzw. Zwischenfrequenz ansprechend auf Konfigurieren des wenigstens einen Empfängers, in dem Einzelbandmodus zu arbeiten; und
Konfigurieren der Niederbandschaltung zum Nutzen der ersten Zwischenfrequenz, und der Hochbandschaltung zum Nutzen einer zweiten Zwischenfrequenz ansprechend auf Konfigurieren des wenigstens einen Empfängers, in dem Trägeraggregationsmodus zu arbeiten.

8. Vorrichtung nach Anspruch 7, wobei der wenigstens eine Empfänger konfiguriert ist zum Empfangen von Funkfrequenzsignalen in einem Millimeterwellenspektrum.

9. Verfahren nach Anspruch 2 oder Vorrichtung nach Anspruch 8, wobei die Niederbandschaltung konfiguriert ist zum Empfangen von Funkfrequenzsignalen mit Frequenzen, die geringer als oder gleich 29,5 GHz sind, und wobei die Hochbandschaltung konfiguriert ist zum Empfangen von Funkfrequenzsignalen mit Frequenzen, die größer als 29,5 GHz sind.

10. Verfahren nach Anspruch 2 oder Vorrichtung nach Anspruch 9, wobei die erste Zwischenfrequenz geringer als oder gleich 11 GHz ist, und die zweite Zwischenfrequenz größer als 11 GHz ist.

11. Verfahren nach Anspruch 10 oder Vorrichtung nach Anspruch 10, wobei die erste Zwischenfrequenz ungefähr 9 GHz ist und innerhalb eines Bereichs von 8-10 GHz ist, und die zweite Zwischenfrequenz ungefähr 12 GHz und innerhalb eines Bereichs von 11 - 14 GHz ist.

12. Vorrichtung nach Anspruch 7, wobei der wenigstens eine Prozessor weiter konfiguriert ist den konfigurierbaren Zwischenfrequenzpfad auszuwählen, der ein Hochpassfilter aufweist; und
wobei der wenigstens eine Prozessor weiter konfiguriert ist zum Vorsehen eines Steuersignals an einen Multiplexer zum Auswählen des Hochpassfilters aus einer Vielzahl von Hochpassfiltern, oder
wobei der wenigstens eine Prozessor weiter konfiguriert ist zum Auswählen des konfigurierbaren Zwischenfrequenzpfades, der das Hochpassfilter umgeht.

13. Vorrichtung nach Anspruch 7, wobei der wenigstens eine Prozessor weiter konfiguriert ist zum Empfangen einer Konfigurationsanzeige von einer Software- oder Firmware-Anwendung.

14. Eine Vorrichtung, die Folgendes aufweist:
wenigstens einen Speicher;
wenigstens einen Empfänger (600), der eine Hochbandschaltung (610) und eine Niederbandschaltung (614), einschließlich eines konfigurierbaren Zwischenfrequenzpfades aufweist;
wenigstens einen Prozessor, der kommunikativ an den wenigstens einen Speicher und den wenigstens einen Empfänger gekoppelt ist, und konfiguriert ist zum:
Konfigurieren des wenigstens einen Empfängers, in wenigstens einem von einem Trägeraggregationsmodus oder einem Einzelbandmodus zu arbeiten;
Konfigurieren der Niederbandschaltung, eine erste Zwischenfrequenz zu nutzen ansprechend auf Konfigurieren des wenigstens einen Empfängers, in dem Einzelbandmodus zu arbeiten; und
Konfigurieren der Hochbandschaltung, die erste Zwischenfrequenz zu nutzen, und der Niederbandschaltung, eine zweite Zwischenfrequenz zu nutzen ansprechend auf Konfigurieren des wenigstens einen Empfängers, in dem Trägeraggregationsmodus zu arbeiten.

15. Vorrichtung nach Anspruch 14, wobei der wenigstens eine Prozessor weiter konfiguriert ist zum Auswählen des konfigurierbaren Zwischenfrequenzpfades, der ein Tiefpassfilter aufweist; und
wobei der wenigstens eine Prozessor weiter konfiguriert ist zum Vorsehen eines Steuersignals an einen Multiplexer zum Nutzen des Tiefpassfilters in einem Zwischenfrequenzpfad, wobei das Tiefpassfilter eines einer Vielzahl von Tiefpassfiltern ist, oder
wobei der wenigstens eine Prozessor weiter konfiguriert ist zum Auswählen des konfigurierbaren Zwischenfrequenzpfades, der das Tiefpassfilter umgeht.

## Revendications

1. Procédé (1000) mis en œuvre par un nœud sans fil en mode d'agrégation de porteuses ou en mode mono-bande, comprenant :
la configuration (1002) du nœud sans fil pour qu'il fonctionne dans au moins un parmi le mode d'agrégation de porteuses ou le mode mono-bande ;
la configuration (1004) d'une chaîne de réception à haute fréquence dans le nœud sans fil pour utiliser une première fréquence intermédiaire en réponse à la configuration du nœud sans fil pour qu'il fonctionne en mode mono-bande ; et
la configuration (1006) d'une chaîne de réception à basse fréquence pour utiliser la première fréquence intermédiaire, et de la chaîne de réception à haute fréquence pour utiliser une deuxième fréquence intermédiaire en réponse à la configuration du nœud sans fil pour qu'il fonctionne en mode d'agrégation de porteuses.

2. Procédé selon la revendication 1, dans lequel le nœud sans fil est configuré pour utiliser un spectre d'ondes millimétriques.

3. Procédé selon la revendication 1, dans lequel la configuration de la chaîne de réception à haute fréquence pour utiliser la deuxième fréquence intermédiaire comporte l'utilisation d'un filtre passe-haut dans un chemin de fréquence intermédiaire ; et
dans lequel la configuration de la chaîne de réception à haute fréquence pour utiliser la première fréquence intermédiaire comporte le contournement du filtre passe-haut dans le chemin de fréquence intermédiaire, ou
comprenant en outre la fourniture d'un signal de commande à un multiplexeur pour utiliser le filtre passe-haut dans le chemin de fréquence intermédiaire, dans lequel le filtre passe-haut est un parmi une pluralité de filtres passe-haut.

4. Procédé selon la revendication 1, dans lequel la configuration du nœud sans fil pour qu'il fonctionne dans au moins un parmi le mode d'agrégation de porteuses ou le mode mono-bande comporte la réception d'une indication de configuration provenant d'une application logicielle ou micro-logicielle.

5. Procédé mis en œuvre par un nœud sans fil en mode d'agrégation de porteuses ou en mode mono-bande, comprenant :
la configuration du nœud sans fil pour qu'il fonctionne dans au moins un parmi le mode d'agrégation de porteuses ou le mode mono-bande ;
la configuration d'une chaîne de réception à basse fréquence dans le nœud sans fil pour utiliser une première fréquence intermédiaire en réponse à la configuration du nœud sans fil pour qu'il fonctionne en mode mono-bande ; et
la configuration d'une chaîne de réception à haute fréquence pour utiliser la première fréquence intermédiaire, et de la chaîne de réception à basse fréquence pour utiliser une deuxième fréquence intermédiaire en réponse à la configuration du nœud sans fil pour qu'il fonctionne en mode d'agrégation de porteuses.

6. Procédé selon la revendication 5, dans lequel la configuration de la chaîne de réception à basse fréquence pour utiliser la deuxième fréquence intermédiaire comporte l'utilisation d'un filtre passe-bas dans un chemin de fréquence intermédiaire ; et
la fourniture supplémentaire d'un signal de commande à un multiplexeur pour utiliser le filtre passe-bas dans le chemin de fréquence intermédiaire, dans lequel le filtre passe-bas est un parmi une pluralité de filtres passe-bas, ou
dans lequel la configuration de la chaîne de réception à basse fréquence pour utiliser la première fréquence intermédiaire comporte le contournement du filtre passe-bas dans le chemin de fréquence intermédiaire.

7. Appareil, comprenant :
au moins une mémoire ;
au moins un récepteur (600) comprenant un circuit basse fréquence (614) et un circuit haute fréquence (610) comportant un chemin de fréquence intermédiaire configurable (702) ;
au moins un processeur relié en communication à l'au moins une mémoire et à l'au moins un récepteur, et configuré pour :
configurer l'au moins un récepteur pour qu'il fonctionne dans au moins un parmi un mode d'agrégation de porteuses ou un mode mono-bande ;
configurer le circuit haute fréquence pour qu'il utilise une première fréquence intermédiaire en réponse à la configuration de l'au moins un récepteur pour qu'il fonctionne en mode mono-bande ; et
configurer le circuit basse fréquence pour qu'il utilise la première fréquence intermédiaire et le circuit haute fréquence pour qu'il utilise une deuxième fréquence intermédiaire en réponse à la configuration de l'au moins un récepteur pour qu'il fonctionne en mode d'agrégation de porteuses.

8. Appareil selon la revendication 7, dans lequel l'au moins un récepteur est configuré pour recevoir des signaux radiofréquences dans un spectre d'ondes millimétriques.

9. Procédé selon la revendication 2 ou appareil selon la revendication 8, dans lequel le circuit basse fréquence est configuré pour recevoir des signaux radiofréquences de fréquences inférieures ou égales à 29,5 GHz, et le circuit haute fréquence est configuré pour recevoir des signaux radiofréquences de fréquences supérieures à 29, GHz.

10. Procédé selon la revendication 2 ou appareil selon la revendication 9, dans lequel la première fréquence intermédiaire est inférieure ou égale à 11 GHz et la deuxième fréquence intermédiaire est supérieure à 11 GHz.

11. Procédé selon la revendication 10 ou appareil selon la revendication 10, dans lequel la première fréquence intermédiaire est d'environ 9 GHz et se situe dans une plage allant de 8 à 10 GHz, et la deuxième fréquence intermédiaire est d'environ 12 GHz et se situe dans une plage allant de 11 à 14 GHz.

12. Appareil selon la revendication 7, dans lequel l'au moins un processeur est configuré en outre pour sélectionner le chemin de fréquence intermédiaire configurable qui comporte un filtre passe-haut ; et
dans lequel l'au moins un processeur est configuré en outre pour fournir un signal de commande à un multiplexeur pour sélectionner le filtre passe-haut parmi une pluralité de filtres passe-haut, ou
dans lequel l'au moins un processeur est configuré en outre pour sélectionner le chemin de fréquence intermédiaire configurable qui contourne le filtre passe-haut.

13. Appareil selon la revendication 7, dans lequel l'au moins un processeur est configuré en outre pour recevoir une indication de configuration en provenance d'une application logicielle ou micro-logicielle.

14. Appareil comprenant :
au moins une mémoire ;
au moins un récepteur (600) comprenant un circuit haute fréquence (610) et un circuit basse fréquence (614) comportant un chemin de fréquence intermédiaire configurable ;
au moins un processeur relié en communication à l'au moins une mémoire et à l'au moins un récepteur, et configuré pour :
configurer l'au moins un récepteur pour qu'il fonctionne dans au moins un parmi un mode d'agrégation de porteuses ou un mode mono-bande ;
configurer le circuit basse fréquence pour qu'il utilise une première fréquence intermédiaire en réponse à la configuration de l'au moins un récepteur pour qu'il fonctionne en mode mono-bande ; et
configurer le circuit haute fréquence pour qu'il utilise la première fréquence intermédiaire et le circuit basse fréquence pour qu'il utilise une deuxième fréquence intermédiaire en réponse à la configuration de l'au moins un récepteur pour qu'il fonctionne en mode d'agrégation de porteuses.

15. Appareil selon la revendication 14, dans lequel l'au moins un récepteur est configuré en outre pour sélectionner le chemin de fréquence intermédiaire configurable qui comporte un filtre passe-bas ; et
dans lequel l'au moins un récepteur est configuré en outre pour fournir un signal de commande à un multiplexeur pour qu'il utilise le filtre passe-bas dans un chemin de fréquence intermédiaire, dans lequel le filtre passe-bas est un parmi une pluralité de filtres passe-bas, ou
dans lequel l'au moins un récepteur est configuré en outre pour sélectionner le chemin de fréquence intermédiaire configurable qui contourne le filtre passe-bas.
